# EUROPÄISCHE PATENTSCHRIFT

(11) **EP 4 415 959 B1**
(45) Veröffentlichungstag und Bekanntmachung des Hinweises auf die Patenterteilung: **22.10.2025**
(21) Anmeldenummer: 21839021.9
(22) Anmeldetag: 08.12.2021
(51) Int. Cl.: B30B 15/14, G05B 19/19, G05B 19/418, B21D 43/02, B30B 15/30

(54) **VERFAHREN ZUM BETRIEB EINER STANZPRESSE**
METHOD FOR OPERATING A PUNCHING PRESS
PROCÉDÉ POUR FAIRE FONCTIONNER UNE PRESSE À POINÇONNER

(43) Veröffentlichungstag der Anmeldung: 21.08.2024
(73) Patentinhaber: Bruderer AG, 9320 Frasnacht (CH)
(72) Erfinder: BÜHLER, Manuel, 9320 Arbon (CH); KREIS, Christian, 9322 Egnach (CH)
(74) Vertreter: E. Blum & Co. AG
(86) Internationale Anmeldenummer: PCT/EP2021/084780
(87) Internationale Veröffentlichungsnummer: WO 2023/104302

(56) Entgegenhaltungen:
- EP-A2- 1 815 972
- EP-A2- 2 481 562
- WO-A1-2009/096271
- JP-A- 2003 340 538

## Beschreibung

### TECHNISCHES GEBIET

Die vorliegende Erfindung betrifft Verfahren zum Betrieb einer Stanzpresse sowie eine Stanzpresse zum Betrieb nach den Verfahren gemäss den Oberbegriffen der unabhängigen Patentansprüche.

### STAND DER TECHNIK

Bei modernen Stanzpressen, auf denen im Folgeschnittverfahren aus einem Materialband Produkte ausgestanzt werden, kommen zunehmend Servo-Vorschübe zum Zuführen des zu bearbeitenden Materialbandes zum Einsatz. Diese können flexibel angesteuert werden, im Gegensatz zu den mechanischen Vorschüben, welche mechanisch zwangsgekoppelt sind mit dem Kurbeltrieb des Pressenstössels. Das Vorschieben des Bandmaterials erfolgt bei den Servo-Vorschüben entweder auf ein Vorschubsignal hin (nockengetriggert) um eine ganze vorgegebene Vorschublänge oder, in Anlehnung an den Betrieb der mechanischen Vorschübe, gemäss einem elektronisch definierten Vorschubprofil winkelsynchron mit dem Kurbeltrieb des Pressenstössels. Letztgenannte Betriebsart hat gegenüber der nockengetriggerten Variante den grossen Vorteil, dass der Vorschubschritt jederzeit in Relation des Pressenstössels ausgefahren wird und die Erreichung der Sollposition an jedem Punkt (Stützstelle) des elektronisch definierten Vorschubprofils überwacht und wenn nötig auskorrigiert werden kann. Dadurch ergibt sich im Prozess eine insgesamt höhere Sicherheit, wie anhand der folgenden zwei Beispiele erkennbar ist:
Beispiel 1: Vorschubphase 300° bis 60°, also symmetrisch um oberen Totpunkt (0°), Vorschublänge 20 mm. Vorschubkontrolle im Werkzeug bei 0°, also halbe Vorschublänge (10mm). Durch die Winkelsynchronität kann bei ausgelöster Vorschubkontrolle ein Sofortstopp der Presse eingeleitet werden. Bei einem nockengetriggerten Vorschub kann die Vorschublänge erst am Ende des Schrittes überwacht werden, weil keine Zwangsführung existiert. Die Vorschubkontrolle kann demnach erst am Vorschub-Ende einen Sofortstopp auslösen. Dadurch ergibt sich im Vergleich mit dem winkelsynchronen Vorschub ein um die halbe Vorschubphase längerer Bremswinkel der Presse.
Beispiel 2: Auslösung eines Sofortstopps z.B. durch Pressen-Überlast (Prozessfehler). Die Presse komme durch den Bremswinkel gerade knapp innerhalb der Vorschubphase zum Stillstand. Beim zwangsgeführten Vorschub wird entsprechend nur wenig Bandmaterial vorgeschoben, während beim nockengetriggerten Vorschub eine ganze Vorschublänge Bandmaterial in das Werkzeug hineingedrückt wird, was das Risiko eines Werkzeugschadens erhöht.

Nachteilig ist jedoch bei den heute bekannten Servo-Vorschüben, bei denen das Vorschieben des Bandmaterials winkelsynchron mit dem Kurbeltrieb des Pressenstössels erfolgt, dass diese relativ starke Servo-Antriebe erfordern, weil je nach Startbedingung grosse Beschleunigungen und damit grosse Drehmomente an den Vorschubachsen bereitgestellt werden müssen, was mit entsprechenden Investitionskosten verbunden ist und zu Beschränkungen bezüglich des zu fördernden Bandmaterials führen kann.

Aus EP 1 815 972 ist ein Verfahren zum Betrieb einer Presse gemäss dem Oberbegriff der Ansprüche 1, 7 und 13 bekannt, bei welchem die Geschwindigkeit der Presse während dem Pressenzyklus variiert werden kann, um einen synchronen Betrieb mit einem der Presse zugeordneten Gerät, z.B. mit einem Beschickungsroboter, zu ermöglichen.

### DARSTELLUNG DER ERFINDUNG

Es stellt sich deshalb die Aufgabe, technische Lösungen zur Verfügung zu stellen, welche die Vorteile des winkelsynchronen Betriebs bei Servo-Vorschüben bewahren, aber die zuvor beschriebenen Nachteile nicht aufweisen oder zumindest teilweise vermeiden.

Diese Aufgabe wird durch die Gegenstände der unabhängigen Patentansprüche 1, 7, 13 und 16 gelöst.

Gemäss diesen betrifft ein erster Aspekt der Erfindung ein erstes Verfahren zum Betrieb einer Stanzpresse mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse.

Bei diesem ersten erfindungsgemässen Verfahren wird im bestimmungsgemässen Stanzbetrieb der Stanzpresse der Pressenstössel von dem Kurbel- oder Exzentertrieb zwischen einem ersten Bewegungstotpunkt, in welchem der Pressenstössel maximal von der Aufspannplatte entfernt ist und das Bearbeitungswerkzeug maximal geöffnet ist, und einem zweiten Bewegungstotpunkt, in welchem der Pressenstössel minimal von der Aufspannplatte entfernt ist und das Bearbeitungswerkzeug maximal geschlossen ist, hin und her bewegt wird. Bei typischen Stanzpressen, bei denen der Pressenstössel von oben gegen eine feststehende Aufspannplatte arbeitet, sind diese Bewegungstotpunkte der obere Totpunkt (auch "OT" genannt) und der untere Totpunkt (auch "UT" genannt) des Pressenstössels.

Das Materialband wird in einem anspruchsgemässen ersten Rotationswinkelfenster des Kurbel- oder Exzentertriebs um den ersten Bewegungstotpunkt herum von dem Servo-Vorschubapparat um eine bestimmte Länge in die Bearbeitungszone vorgeschoben und in den Vorschubpausen in einem zweiten Rotationswinkelfenster des Kurbel- oder Exzentertriebs, welches sich ausserhalb des ersten Rotationswinkelfensters vor und bis zu dem zweiten Bewegungstotpunkt erstreckt, mit dem Bearbeitungswerkzeug bearbeitet.

Die Vorschubbewegung des Servo-Vorschubapparates erfolgt dabei im bestimmungsgemässen Stanzbetrieb der Stanzpresse gemäss einem elektronisch definierten Vorschub-Bewegungsprofil, welches in dem ersten Rotationswinkelfenster elektronisch synchronisiert zu der Rotation des Kurbel- oder Exzentertriebs abgefahren wird.

Erfindungsgemäss wird bei einem Auslösen eines Pressenstopps in dem ersten Rotationswinkelfenster die Synchronisation des Vorschub-Bewegungsprofils mit der Rotation des Kurbel- oder Exzentertriebs aufgehoben und das Vorschub-Bewegungsprofil unabhängig von der Rotation des Kurbel- oder Exzentertriebs bis zum Ende abgefahren.

Durch diese erste erfindungsgemässe Betriebsweise wird der maximale Drehmomentbedarf der Vorschubachsen bei winkelsynchron mit dem Kurbeltrieb des Pressenstössels betriebenen Servo-Vorschüben gesenkt, so dass kleinere und damit kostengünstigere Servo-Antriebe zum Einsatz kommen können oder aber mit einem gegebenen Servo-Antrieb mehr Last bewegt werden kann.

Bevorzugterweise erfolgt dabei das Abfahren des Vorschub-Bewegungsprofils mit einer Geschwindigkeit, welche der Geschwindigkeit entspricht, mit welcher es zum Zeitpunkt des Auslösens des Pressenstopps bzw. zum Zeitpunkt des Auflösens der Synchronisation des Vorschub-Bewegungsprofils mit der Rotation des Kurbel- oder Exzentertriebs abgefahren wurde. Auf diese Weise ist sichergestellt, dass der Vorschubschritt abgeschlossen ist, bevor eine allfällige weitere Rotation des Kurbel- oder Exzentertriebs der Presse das zweite Rotationswinkelfenster erreichen kann.

Für den Fall, dass die Rotation des Kurbel- oder Exzentertriebs nach dem Auslösen des Pressenstopps nicht bei einem bestimmten Rotationswinkel vor einem darauffolgenden ersten Rotationswinkelfenster oder vor Eintritt in ein darauffolgendes erstes Rotationswinkelfenster zum Stillstand kommt, ist es gemäss einer ersten Variante bevorzugt, dass das Vorschub-Bewegungsprofil nach Erreichen des darauffolgenden ersten Rotationswinkelfensters erneut vollständig abgefahren wird.

Dabei ist es bevorzugt, dass das Vorschub-Bewegungsprofil nach Erreichen des darauffolgenden ersten Rotationswinkelfensters erneut mit einer Geschwindigkeit vollständig abgefahren wird, welche der Geschwindigkeit entspricht, mit welcher es bei einer Synchronisation mit der Rotation des Kurbel- oder Exzentertriebs beim Eintritt in dieses darauffolgende erste Rotationswinkelfenster abgefahren würde. Auf diese Weise ist sichergestellt, dass der Vorschubschritt abgeschlossen ist, bevor die Rotation des Kurbel- oder Exzentertriebs der Presse das darauffolgende zweite Rotationswinkelfenster erreichen kann.

Gemäss einer zweiten Variante ist es für den Fall, dass die Rotation des Kurbel- oder Exzentertriebs nach dem Auslösen des Pressenstopps nicht bei einem bestimmten Rotationswinkel vor einem darauffolgenden ersten Rotationswinkelfenster oder vor Eintritt in ein darauffolgendes erstes Rotationswinkelfenster zum Stillstand kommt und bei diesem bestimmten Rotationswinkel oder bei Eintritt in das darauffolgende erste Rotationswinkelfenster eine oder mehrere Bedingungen nicht erfüllt sind, z.B. eine bestimmte Rotationsgeschwindigkeit des Kurbel- oder Exzentertriebs unterschritten ist, von Vorteil, dass bis zu einer erneuten Startanforderung keine weitere Vorschubbewegung des Servo-Vorschubapparates mehr erfolgt.

Gemäss einer dritten Variante ist es bevorzugt, dass nach dem Auslösen des Pressenstopps und dem vollständigen Abfahren des Vorschub-Bewegungsprofils unabhängig davon, ob die Rotation des Kurbel- oder Exzentertriebs nach dem Auslösen des Pressenstopps bei einem bestimmten Rotationswinkel vor einem darauffolgenden ersten Rotationswinkelfenster oder vor Eintritt in ein darauffolgendes erstes Rotationswinkelfenster zum Stillstand kommt, bis zu einer erneuten Startanforderung keine weitere Vorschubbewegung des Servo-Vorschubapparates erfolgt.

Welche der drei Varianten bevorzugter oder weniger bevorzugt ist, hängt stark von den jeweiligen Betriebsbedingungen und dem zu fertigenden Produkt ab. So gibt es z.B. Produkte, die bei der Fertigung weniger kritisch bezüglich der Werkzeug-Eintauchtiefe sind als andere, so dass auch bei geringen Hubgeschwindigkeiten im Bremsbetrieb oder beim Hochfahren der Presse noch brauchbare Produkte entstehen. Für derartige Produkte eignet sich die erste Variante besonders gut.

Für Produkte, welche kritisch bezüglich der Werkzeug-Eintauchtiefe sind, eignen sich die Verfahren gemäss der zweiten und dritten Variante besser als das gemäss der ersten Variante, wobei für den Fall, dass Mehrfachstanzungen ohne Vorschub des Materialbandes zu Qualitätseinbussen führen könnten, die zweite Variante gegenüber der dritten zu favorisieren ist.

Ein zweiter Aspekt der Erfindung betrifft ein weiteres Verfahren zum Betrieb einer Stanzpresse mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse.

Wie schon beim ersten erfindungsgemässen Verfahren wird bei diesem zweiten erfindungsgemässen Verfahren im bestimmungsgemässen Stanzbetrieb der Stanzpresse der Pressenstössel von dem Kurbel- oder Exzentertrieb zwischen einem ersten Bewegungstotpunkt, in welchem der Pressenstössel maximal von der Aufspannplatte entfernt ist und das Bearbeitungswerkzeug maximal geöffnet ist, und einem zweiten Bewegungstotpunkt, in welchem der Pressenstössel minimal von der Aufspannplatte entfernt ist und das Bearbeitungswerkzeug maximal geschlossen ist, hin und her bewegt wird. Bei typischen Stanzpressen, bei denen der Pressenstössel von oben gegen eine feststehende Aufspannplatte arbeitet, sind diese Bewegungstotpunkte der obere Totpunkt (auch "OT" genannt) und der untere Totpunkt (auch "UT" genannt) des Pressenstössels.

Das Materialband wird auch in diesem Verfahren in einem ersten Rotationswinkelfenster des Kurbel- oder Exzentertriebs um den ersten Bewegungstotpunkt herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb des ersten Rotationswinkelfensters vor und bis zu dem zweiten Bewegungstotpunkt erstreckt, mit dem Bearbeitungswerkzeug bearbeitet.

Die Vorschubbewegung des Servo-Vorschubapparates erfolgt dabei ebenfalls, wie schon im ersten erfindungsgemässen Verfahren, im bestimmungsgemässen Stanzbetrieb der Stanzpresse gemäss einem elektronisch definierten Vorschub-Bewegungsprofil, welches in dem ersten Rotationswinkelfenster elektronisch synchronisiert zu der Rotation des Kurbel- oder Exzentertriebs abgefahren wird.

Erfindungsgemäss wird bei diesem zweiten erfindungsgemässen Verfahren bei einem Auslösen eines Pressenstopps ausserhalb des ersten Rotationswinkelfensters für den Fall, dass die Rotation des Kurbel- oder Exzentertriebs nach dem Auslösen des Pressenstopps nicht spätestens bei einem bestimmten Rotationswinkel vor dem darauffolgenden ersten Rotationswinkelfenster oder vor Eintritt in das darauffolgende erste Rotationswinkelfenster zum Stillstand kommt, die Synchronisation des Vorschub-Bewegungsprofils mit der Rotation des Kurbel- oder Exzentertriebs bei Erreichen des ersten Rotationswinkelfensters aufgehoben und das Vorschub-Bewegungsprofil sodann unabhängig von der Rotation des Kurbel- oder Exzentertriebs vollständig abgefahren.

Auch durch diese zweite erfindungsgemässe Betriebsweise wird der maximale Drehmomentbedarf der Vorschubachsen bei winkelsynchron mit dem Kurbeltrieb des Pressenstössels betriebenen Servo-Vorschüben gesenkt, so dass kleinere und damit kostengünstigere Servo-Antriebe zum Einsatz kommen können oder aber mit einem gegebenen Servo-Antrieb mehr Last bewegt werden kann.

Dabei ist es bevorzugt, dass das Vorschub-Bewegungsprofil mit einer Geschwindigkeit abgefahren wird, welche der Geschwindigkeit entspricht, mit welcher es zum Zeitpunkt des Auflösens der Synchronisation des Vorschub-Bewegungsprofils mit der Rotation des Kurbel- oder Exzentertriebs abgefahren wurde. Auf diese Weise ist sichergestellt, dass der Vorschubschritt abgeschlossen ist, bevor die Rotation des Kurbel- oder Exzentertriebs der Presse das zweite Rotationswinkelfenster erreichen kann.

Für den Fall, dass die Rotation des Kurbel- oder Exzentertriebs nach dem Auslösen des Pressenstopps und dem anschliessenden Abfahren des Vorschub-Bewegungsprofils nicht bei einem bestimmten Rotationswinkel vor dem darauffolgenden ersten Rotationswinkelfenster oder vor Eintritt in das darauffolgende erste Rotationswinkelfenster zum Stillstand kommt, ist es gemäss einer ersten Variante des zweiten erfindungsgemässen Verfahrens bevorzugt, dass das Vorschub-Bewegungsprofil nach Erreichen des darauffolgenden ersten Rotationswinkelfensters erneut vollständig abgefahren wird.

Dabei ist es von Vorteil, dass das Vorschub-Bewegungsprofil nach Erreichen des darauffolgenden ersten Rotationswinkelfensters erneut mit einer Geschwindigkeit vollständig abgefahren wird, welche der Geschwindigkeit entspricht, mit welcher es bei einer Synchronisation mit der Rotation des Kurbel- oder Exzentertriebs beim Eintritt in dieses darauffolgende erste Rotationswinkelfenster abgefahren würde. Auf diese Weise ist sichergestellt, dass der Vorschubschritt abgeschlossen ist, bevor die Rotation des Kurbel- oder Exzentertriebs der Presse das darauffolgende zweite Rotationswinkelfenster erreichen kann.

Gemäss einer zweiten Variante des zweiten erfindungsgemässen Verfahrens ist es für den Fall, dass die Rotation des Kurbel- oder Exzentertriebs nach dem Auslösen des Pressenstopps und dem anschliessenden Abfahren des Vorschub-Bewegungsprofils nicht bei einem bestimmten Rotationswinkel vor einem darauffolgenden ersten Rotationswinkelfenster oder vor Eintritt in ein darauffolgendes erstes Rotationswinkelfenster zum Stillstand kommt und bei diesem bestimmten Rotationswinkel oder bei Eintritt in das darauffolgende erste Rotationswinkelfenster eine oder mehrere Bedingungen nicht erfüllt sind, z.B. eine bestimmte Rotationsgeschwindigkeit des Kurbel- oder Exzentertriebs unterschritten ist, von Vorteil, dass bis zu einer erneuten Startanforderung keine weitere Vorschubbewegung des Servo-Vorschubapparates erfolgt.

Gemäss einer dritten Variante des erfindungsgemässen zweiten Verfahrens ist es bevorzugt, dass nach dem Auslösen des Pressenstopps und dem anschliessenden Abfahren des Vorschub-Bewegungsprofils unabhängig davon, ob die Rotation des Kurbel- oder Exzentertriebs bei einem bestimmten Rotationswinkel vor einem darauffolgenden ersten Rotationswinkelfenster oder vor Eintritt in ein darauffolgendes erstes Rotationswinkelfenster zum Stillstand kommt, bis zu einer erneuten Startanforderung keine weitere Vorschubbewegung des Servo-Vorschubapparates erfolgt.

Welche der drei Varianten bevorzugter oder weniger bevorzugt ist, hängt auch bei diesem zweiten erfindungsgemässen Verfahren stark von den jeweiligen Betriebsbedingungen und dem zu fertigenden Produkt ab. So gibt es z.B. Produkte, die in der Fertigung weniger kritisch bezüglich der Werkzeug-Eintauchtiefe sind als andere, so dass auch bei geringen Hubgeschwindigkeiten im Bremsbetrieb oder beim Hochfahren der Stanzpresse brauchbare Produkte entstehen. Für derartige Produkte eignet sich die erste Variante besonders gut. Für Produkte, welche kritisch bezüglich der Werkzeug-Eintauchtiefe sind, eignen sich die Verfahren gemäss der zweiten und dritten Variante besser als das gemäss der ersten Variante, wobei für den Fall, dass Mehrfachstanzungen ohne Vorschub des Materialbandes zu Qualitätseinbussen führen könnten die zweite Varianten gegenüber der dritten zu favorisieren ist.

Bei weiteren bevorzugten Ausführungsformen des ersten und des zweiten erfindungsgemässen Verfahrens ist es von Vorteil, dass nach dem Ausführen des Pressenstopps beim Neustarten der Presse zur Wiederaufnahme des bestimmungsgemässen Stanzbetriebs eine Vorschubbewegung des Servo-Vorschubapparates frühestens in dem nächstfolgenden ersten Rotationswinkelfenster erfolgt. Diese Vorschubbewegung ist bevorzugterweise erneut mit der Rotation des Kurbel- oder Exzentertriebs synchronisiert.

Dabei erfolgt die Vorschubbewegung gemäss einer vorteilhaften Variante erst dann, wenn bei einem bestimmten Rotationswinkel vor einem darauffolgenden ersten Rotationswinkelfenster oder beim Eintritt in das nächstfolgende erste Rotationswinkelfenster oder ein darauffolgendes erstes Rotationswinkelfenster eine oder mehrere Bedingungen erfüllt sind, z.B. eine bestimmte Rotationsgeschwindigkeit des Kurbel- oder Exzentertriebs erreicht ist. Diese Variante eignet sich besonders für die Fertigung von Produkten, welche kritisch bezüglich der Werkzeug-Eintauchtiefe sind.

Ein dritter Aspekt der Erfindung betrifft eine Stanzpresse zum Betrieb nach einem der Verfahren gemäss dem ersten oder zweiten Aspekt der Erfindung. Die Stanzpresse weist einen von einem Kurbel- oder Exzentertrieb angetriebenen Pressenstössel mit einem ersten Teil eines Bearbeitungswerkzeugs auf, welcher im bestimmungsgemässen Betrieb in einer Bearbeitungszone der Stanzpresse gegen eine feststehende Aufspannplatte mit einem zugeordneten zweiten Teil des Bearbeitungswerkzeugs arbeitet. Auch weist die Stanzpresse einen Servo-Vorschubapparat auf, zum intermittierenden Zuführen eines zu bearbeitenden Materialbandes zur Bearbeitungszone der Stanzpresse.

Die Stanzpresse ist derartig ausgebildet, dass im bestimmungsgemässen Stanzbetrieb der Stanzpresse der Pressenstössel von dem Kurbel- oder Exzentertrieb zwischen einem ersten Bewegungstotpunkt, in welchem der Pressenstössel maximal von der Aufspannplatte entfernt ist und das Bearbeitungswerkzeug maximal geöffnet ist, und einem zweiten Bewegungstotpunkt, in welchem der Pressenstössel minimal von der Aufspannplatte entfernt ist und das Bearbeitungswerkzeug maximal geschlossen ist, hin und her bewegt wird.

Zudem ist die Stanzpresse derartig ausgebildet, dass das Materialband in einem ersten Rotationswinkelfenster des Kurbel- oder Exzentertriebs um den ersten Bewegungstotpunkt herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb der ersten Rotationswinkelfensters vor und bis zu dem zweiten Bewegungstotpunkt erstreckt, mit dem Bearbeitungswerkzeug bearbeitet wird.

Weiter ist die Stanzpresse derartig ausgebildet, dass die Vorschubbewegung des Servo-Vorschubapparates gemäss einem elektronisch definierten Vorschub-Bewegungsprofil erfolgt, welches in dem ersten Rotationswinkelfenster elektronisch synchronisiert zu der Rotation des Kurbel- oder Exzentertriebs abgefahren wird.

Erfindungsgemäss umfasst die Stanzpresse eine Steuerung, welche bei Auslösen eines Pressenstopps in dem ersten Rotationswinkelfenster die Synchronisation des Vorschub-Bewegungsprofils mit der Rotation des Kurbel- oder Exzentertriebs aufhebt und das Vorschub-Bewegungsprofil unabhängig von der Rotation des Kurbel- oder Exzentertriebs bis zum Ende abfahren lässt.

Alternativ oder ergänzend ist die Steuerung derartig ausgebildet, dass sie bei Auslösen eines Pressenstopps ausserhalb des ersten Rotationswinkelfensters für den Fall, dass die Rotation des Kurbel- oder Exzentertriebs nach dem Auslösen des Pressenstopps nicht bei einem bestimmten Rotationswinkel vor dem darauffolgenden ersten Rotationswinkelfenster oder vor Eintritt in das darauffolgende erste Rotationswinkelfenster zum Stillstand kommt, die Synchronisation des Vorschub-Bewegungsprofils mit der Rotation des Kurbel- oder Exzentertriebs bei Erreichen des ersten Rotationswinkelfensters aufhebt und das Vorschub-Bewegungsprofil sodann unabhängig von der Rotation des Kurbel- oder Exzentertriebs vollständig abfahren lässt.

### Kurze Beschreibung der Zeichnungen

Weitere bevorzugte Ausführungen der Erfindung ergeben sich aus den abhängigen Ansprüchen und aus der nun folgenden Beschreibung anhand der Figuren, welche schematisch verschiedene Varianten der erfindungsgemässen Verfahren illustrieren.

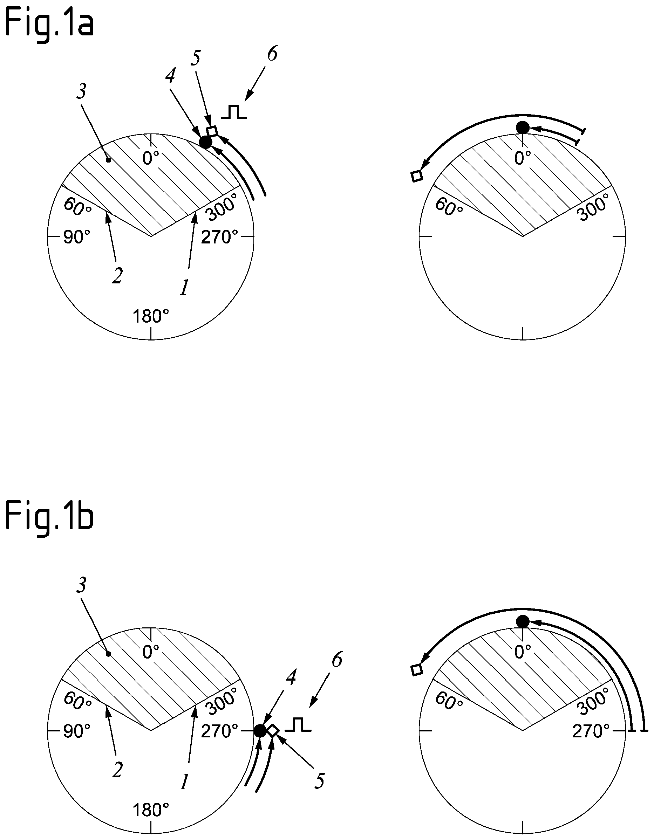

Dabei zeigen die Figuren 1a, 1b, 3a, 3b, 9 und 10 jeweils schematische Darstellungen der Synchronisationssituation zwischen dem elektronisch definierten Vorschubbewegungsprofil 5 und Rotation der Kurbelwelle der Stanzpresse 4 im Zeitpunkt des Pressenstoppsignals 6 und nach erfolgtem Pressenstopp, und zwar:
Fig. 1a bei Stoppsignal 6 innerhalb der Vorschub-Phase 3 bei langsamer Pressenhubzahl (100 Hübe pro Minute);
Fig. 1b bei Stoppsignal 6 ausserhalb der Vorschub-Phase 3 bei langsamer Pressenhubzahl (100 Hübe pro Minute);
Fig. 3a bei Stoppsignal 6 innerhalb der Vorschub-Phase 3 bei schneller Pressenhubzahl (1000 Hübe pro Minute);
Fig. 3b bei Stoppsignal 6 ausserhalb der Vorschub-Phase 3 bei schneller Pressenhubzahl (1000 Hübe pro Minute);
Fig. 9 bei Stoppsignal 6 innerhalb der Vorschub-Phase 3 bei schneller Pressenhubzahl (1000 Hübe pro Minute) mit verfrühtem Vorschubstopp;
Fig. 10 bei Stoppsignal 6 ausserhalb der Vorschub-Phase 3 bei schneller Pressenhubzahl (1000 Hübe pro Minute) mit verfrühtem Vorschubstopp;

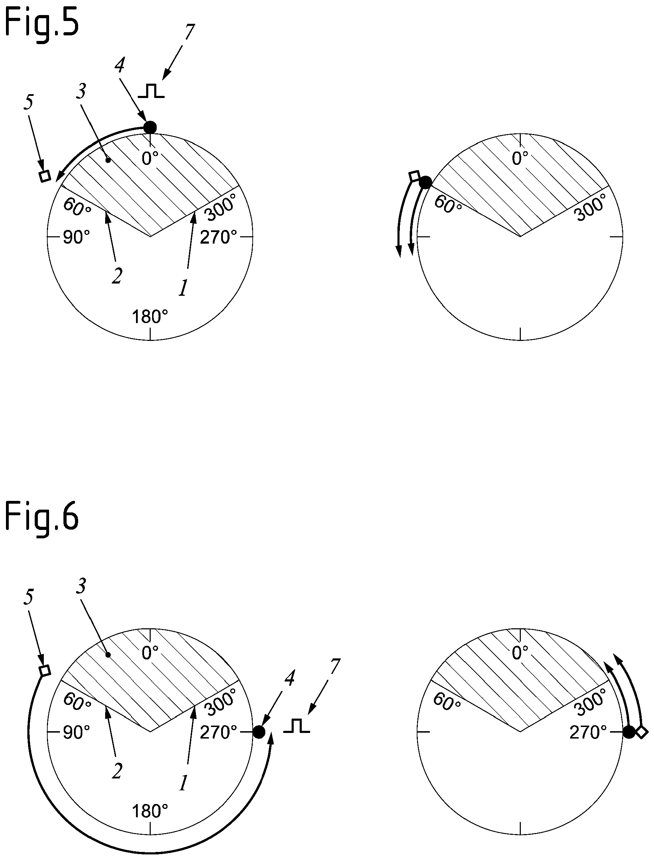

Die Figuren 5, 6 und 13 und zeigen jeweils schematische Darstellungen der Synchronisationssituation zwischen dem elektronisch definierten Vorschubbewegungsprofil 5 und der Rotation der Kurbelwelle der Stanzpresse 4 im Zeitpunkt des Pressenstartsignals 7 und nach erfolgtem Pressenstart, und zwar:
Fig. 5 bei Startsignal 7 innerhalb der Vorschub-Phase 3 und Beschleunigung auf schnelle Pressenhubzahl (1000 Hübe pro Minute);
Fig. 6 bei Startsignal 7 ausserhalb der Vorschub-Phase 3 und Beschleunigung auf schnelle Pressenhubzahl (1000 Hübe pro Minute);

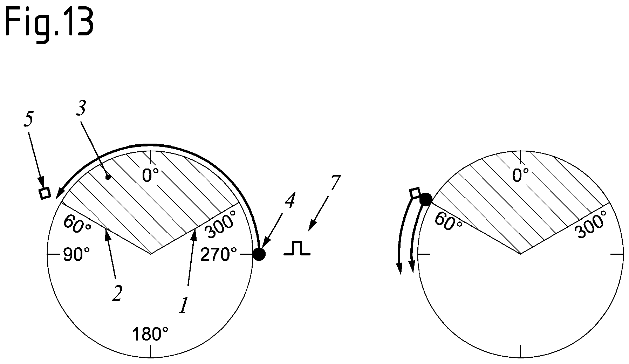

Fig. 13 bei Startsignal 7 ausserhalb der Vorschub-Phase 3 bei schneller Pressenhubzahl (1000 Hübe pro Minute) bei verzögertem Vorschubstart;

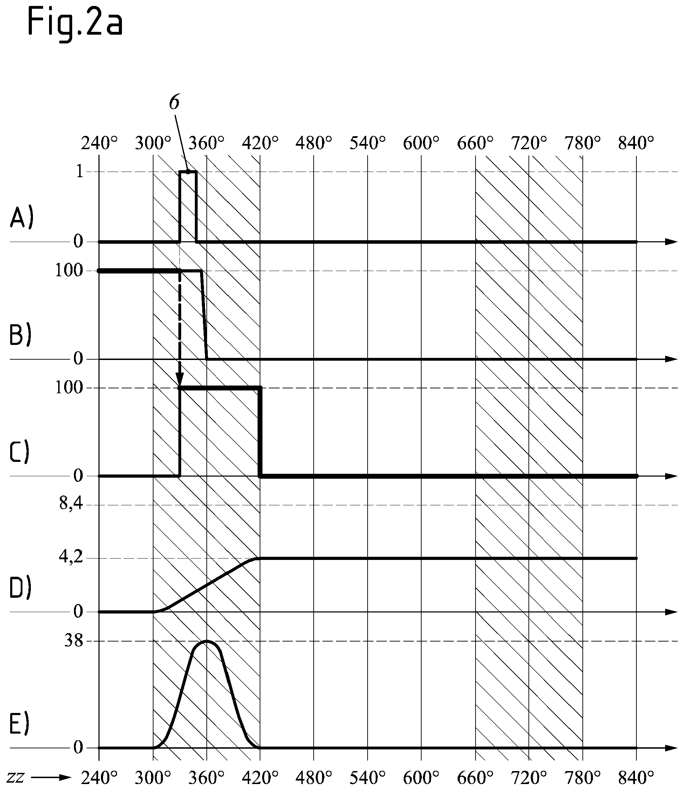

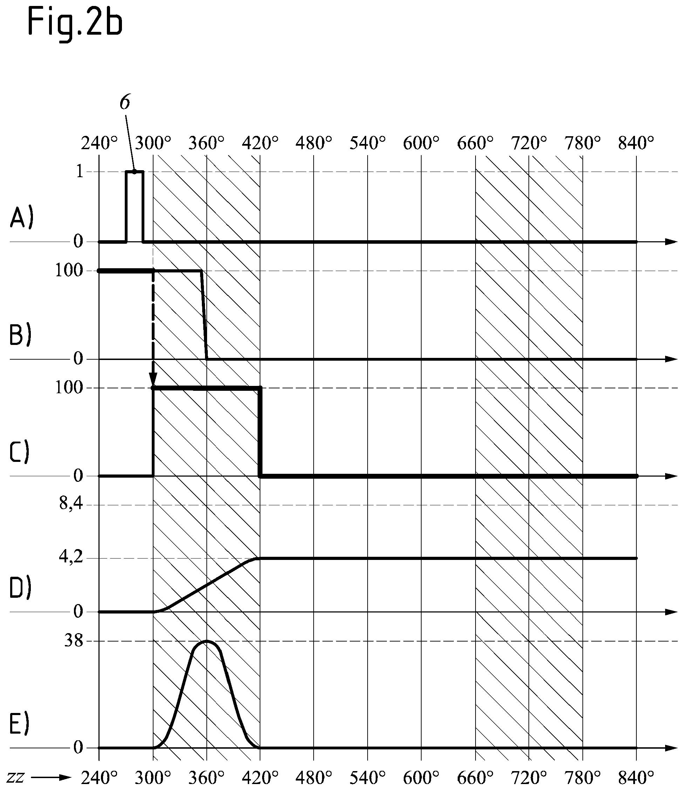

Die Figuren 2a, 2b, 4a, 4b, 7, 8, 11, 12 und 14 zeigen für die in den Figuren 1a, 1b, 3a, 3b, 5, 6, 9, 10 und 13 dargestellten Situationen den Verlauf der folgenden Betriebsparameter über dem Rotationswinkel ZZ des Kurbeltriebs der Stanzpresse:
A = Stopp- bzw. Start-Signal
B = Drehzahl realer Leitwert (1/min)
C = Drehzahl virtueller Leitwert (1/min)
D = Ist-Position Vorschub (°)
E = Ist-Drehzahl Vorschub (°/s)

Dabei gehören die Figuren wie folgt zusammen:
Fig. 1a + Fig. 2a
Fig. 1b + Fig. 2b
Fig. 3a + Fig. 4a
Fig. 3b + Fig. 4b
Fig. 5 + Fig. 7
Fig. 6 + Fig. 8
Fig. 9 + Fig. 11
Fig. 10 + Fig. 12
Fig. 13 + Fig. 14

### Wege zur Ausführung der Erfindung

Die Figuren 1a, 1b, 3a, 3b, 9 und 10 zeigen jeweils schematische Darstellungen der Synchronisationssituation zwischen dem elektronisch definierten Vorschubbewegungsprofil 5 und der Rotation der Kurbelwelle der Stanzpresse 4 im Zeitpunkt des Pressenstoppsignals 6 (linke Darstellung) und nach erfolgtem Pressenstopp (rechte Darstellung). Die Figuren 5, 6, 13 und 14 zeigen jeweils in analoger Weise schematische Darstellungen der Synchronisationssituation zwischen dem elektronisch definierten Vorschubbewegungsprofil 5 und der Rotation der Kurbelwelle der Stanzpresse 4 im Zeitpunkt des Pressenstartsignals 7 (linke Darstellung) und nach erfolgtem Pressenstart (rechte Darstellung).

Dargestellt in Form eines Kreises ist jeweils eine Umdrehung (360°) der Kurbelwelle des Kurbeltriebs der Stanzpresse, wobei der erste Bewegungstotpunkt des Pressenstössels oben als 0° Position angegeben ist und der zweite Bewegungstotpunkt unten als 180° Position. Die Rotationsrichtung ist entgegen dem Uhrzeigersinn. Die Vorschub-Phase 3 (anspruchsgemässes erstes Rotationswinkelfenster) ist schraffiert dargestellt und erstreckt sich zwischen einem Vorschubstartwinkel 1 bei 300° und einem Vorschubstoppwinkel 2 bei 60°. Bei allen hier dargestellten Beispielen wird der Bremsvorgang zeitlich unter Berücksichtigung des Bremsweges (Reaktionszeit plus mechanische Bremszeit) so eingeleitet, dass die Presse im oberen Totpunkt stoppt, also bei 0°.

Die Figuren 1a und 1b zeigen eine schematische Darstellung der Synchronisationssituation zwischen dem elektronisch definierten Vorschubbewegungsprofil 5 und Rotation der Kurbelwelle 4 der Stanzpresse im Zeitpunkt des Pressenstoppsignals 6 und nach erfolgtem Pressenstopp, einmal bei einem Stoppsignal 6 innerhalb der Vorschub-Phase 3 (Fig. 1a) und einmal bei einem Stoppsignal 6 ausserhalb der Vorschub-Phase 3 (Fig. 1b), jeweils bei einem Betrieb mit langsamer Pressenhubzahl (100 Hübe pro Minute).

Wie der linken Darstellung jeweils zu entnehmen ist, welche die Synchronisationssituation zwischen dem elektronisch definierten Vorschubbewegungsprofil 5 und der Rotation der Kurbelwelle der Stanzpresse 4 im Zeitpunkt des Pressenstoppsignals zeigt, laufen das Vorschubprofil 5 und die Rotation der Kurbelwelle 4 bis zum Stoppsignal 6 synchron miteinander, indem die reale Rotation der Kurbelwelle 4 als realer Leitwert für das Abfahren des elektronisch definierten Vorschubbewegungsprofils 5 des Servo-Pressenvorschubs dient.

Wie in Zusammenschau der Fig. 1a mit Fig. 2a zu erkennen ist, welche den Verlauf verschiedener Betriebsparameter über dem Rotationswinkel des Kurbeltriebs der Stanzpresse für die dargestellte Situation zeigt, wird bei ca. 330° innerhalb der Vorschubphase 3 eine Stoppanforderung 6 ausgelöst (siehe Kurve A), wodurch die Kupplung der Stanzpresse zum Pressenantrieb geöffnet und die Bremse betätigt wird. Sofort nach Erkennen der Stoppanforderung 6 wird die Synchronisation zwischen dem elektronisch definierten Vorschubbewegungsprofil 5 und der Rotation der Kurbelwelle der Stanzpresse 4, welche über die Drehzahl der Kurbelwelle der Stanzpresse als realer Leitwert erfolgt (siehe Kurve B)), aufgehoben und durch einen virtuellen Leitwert ersetzt (siehe Kurve C)), welcher über die gesamte verbleibende Vorschubphase 3 dem zum Zeitpunkt der Stoppanforderung 6 vorliegenden realen Leitwert B) entspricht. Dieses Wechseln vom realen Leitwert B) auf den virtuellen Leitwert C) ist in Fig. 2a mit einem gestrichelten Pfeil angedeutet. Wie anhand der Verläufe der Ist-Position Vorschub (siehe Kurve D)) und Ist-Drehzahl Vorschub (siehe Kurve E)) zu erkennen ist, wird das Vorschubbewegungsprofil mit dem virtuellen Leitwert C) zu Ende gefahren als hätte es keine Stoppanforderung 6 gegeben. Die Drehzahl des virtuellen Leitwerts wird am Ende 2 der Vorschubphase 3 (bei 420° bzw. 60°) auf Null gesetzt (siehe Kurve C)). Wie weiter zu erkennen ist, wurde die Rotation der Kurbelwelle 4 bei der hier dargestellten langsamen Pressenhubzahl innerhalb der Vorschubphase im oberen Totpunkt UT bei 0° gestoppt (siehe Kurve B)).

Die Situation bei Stoppanforderung 6 ausserhalb der Vorschubphase 3 ist analog in den Figuren 1b und 2b dargestellt. Im dargestellten Beispiel wird die Stoppanforderung 6 bei 270° ausgelöst, also vor der Vorschub-phase 3, und auch noch vor der Vorschubphase erkannt. Wie anhand der Kurven A) und B) zu erkennen ist, rotiert die Kurbelwelle 4 noch ungebremst bis in die Vorschubphase 3 und wird erst in der Vorschubphase 3 abgebremst. In diesem Fall wird aufgrund der vorliegenden Stoppanforderung 6 beim Eintritt in die Vorschubphase 3 die Synchronisation zwischen dem elektronisch definierten Vorschubbewegungsprofil 5 und der Rotation der Kurbelwelle der Stanzpresse 4, welche über die Drehzahl B) der Kurbelwelle der Stanzpresse als realer Leitwert erfolgt (siehe Kurve B)), aufgehoben und durch einen virtuellen Leitwert C) ersetzt (siehe Kurve C)), welcher über die gesamte verbleibende Vorschubphase 3 dem zum Zeitpunkt der Stoppanforderung 6 vorliegenden realen Leitwert B) entspricht. Dieses Wechseln vom realen Leitwert B) auf den virtuellen Leitwert C) ist in Fig. 2b mit einem gestrichelten Pfeil angedeutet. Wie anhand der Verläufe der Ist-Position Vorschub (siehe Kurve D)) und Ist-Drehzahl Vorschub (siehe Kurve E)) zu erkennen ist, wird das Vorschubbewegungsprofil mit dem virtuellen Leitwert C) zu Ende gefahren als hätte es keine Stoppanforderung 6 gegeben. Die Drehzahl des virtuellen Leitwerts wird am Ende 2 der Vorschubphase 3 (bei 420° bzw. 60°) auf Null gesetzt (siehe Kurve C)). Wie weiter zu erkennen ist, wurde die Rotation der Kurbelwelle 4 bei der hier dargestellten langsamen Pressenhubzahl innerhalb der Vorschubphase im oberen Totpunkt UT bei 0° bzw. 360° gestoppt (siehe Kurve B)).

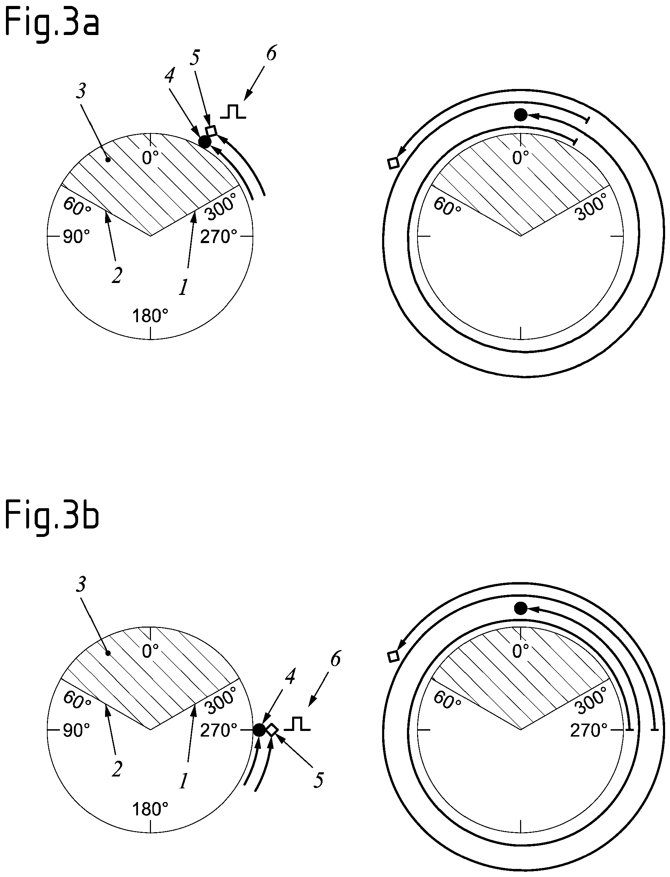

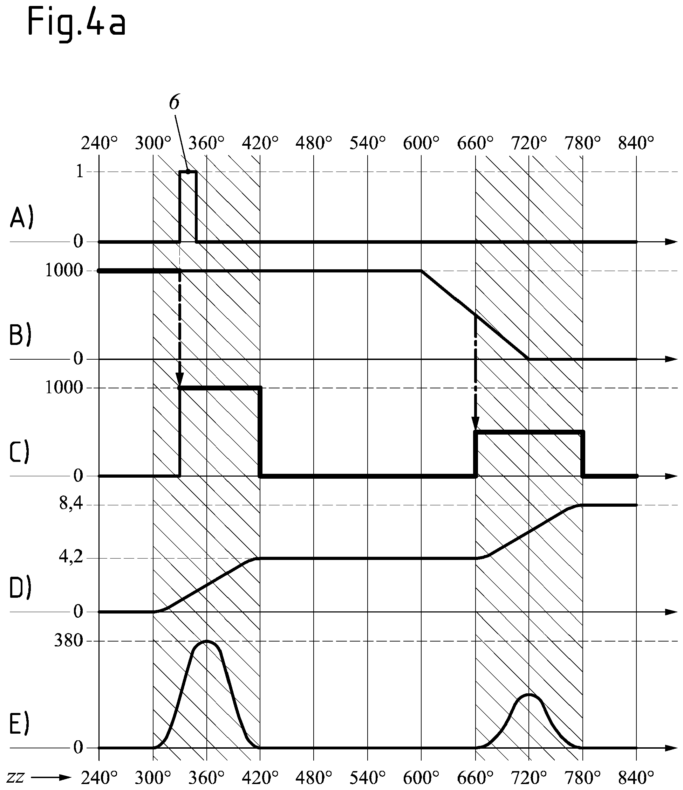

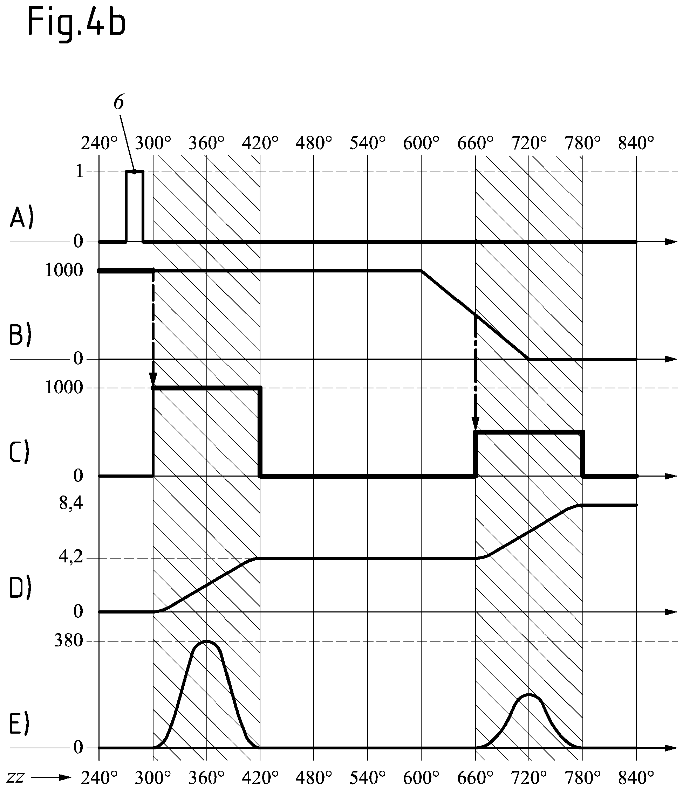

Die Figuren 3a, 3b und 4a, 4b zeigen Darstellungen wie die Figuren 1a, 1b und 2a, 2b, jedoch für einen Betrieb bei schneller Pressenhubzahl (1000 Hübe pro Minute).

Wie aus einem Vergleich der Figuren 2a bzw. 2b und 4a bzw. 4b hervorgeht, besteht der augenscheinlichste Unterschied zum Betrieb der Presse mit langsamer Pressenhubzahl darin, dass es nicht mehr möglich ist, die Presse innerhalb der ersten Vorschubphase im oberen Totpunkt zu stoppen. Das Verhalten bezüglich des Aufhebens der Synchronisation zwischen dem elektronisch definierten Vorschubbewegungsprofil 5 und der Rotation der Kurbelwelle der Stanzpresse 4 und bezüglich des Zuendefahrens des Vorschubprofils 5 mittels eines virtuellen Leitwerts C) ist für die erste Vorschubphase 3 (300° bis 420°) identisch wie bei der langsamen Pressenhubzahl.

Im vorliegenden Fall rotiert die Kurbelwelle 4, sowohl bei Stoppanforderung 6 innerhalb der Vorschub-phase 3 (Figuren 3a und 4a) als auch bei Stoppanforderung 6 kurz vor der Vorschubphase (Figuren 3b und 4b), ungebremst durch die erste Vorschubphase 3 und wird kurz vor der zweiten Vorschubphase bei 600° abgebremst, so dass sie in der zweiten Vorschubphase im oberen Totpunkt bei 720° gestoppt wird.

Wie schon bei den beim Betrieb der Presse mit langsamer Pressenhubzahl gemäss den Figuren 2a und 2b wird bei Stoppanforderung 6 innerhalb der Vorschubphase 3 bzw. beim Vorliegen der Stoppanforderung 6 beim Eintritt in die Vorschubphase 3 die Synchronisation zwischen dem elektronisch definierten Vorschubbewegungsprofil 5 und der Rotation der Kurbelwelle der Stanzpresse 4, welche über die Drehzahl B) der Kurbelwelle der Stanzpresse als realer Leitwert erfolgt (siehe Kurve B)), aufgehoben und durch einen virtuellen Leitwert C) ersetzt (siehe Kurve C)), welcher über die gesamte verbleibende Vorschubphase 3 dem zum Zeitpunkt der Stoppanforderung 6 bzw. des Eintritts in die erste Vorschubphase 3 vorliegenden realen Leitwert B) entspricht. Dieses Wechseln vom realen Leitwert B) auf den virtuellen Leitwert C) ist in den Figuren 4a und 4b mit einem gestrichelten Pfeil angedeutet. Wie anhand der Verläufe der Ist-Position Vorschub (siehe Kurve D)) und Ist-Drehzahl Vorschub (siehe Kurve E)) zu erkennen ist, wird das Vorschubbewegungsprofil in der ersten Vorschubphase 3 mit diesem ersten virtuellen Leitwert C) zu Ende gefahren als hätte es keine Stoppanforderung 6 gegeben. Die Drehzahl des virtuellen Leitwerts wird am Ende 2 der ersten Vorschubphase 3 (bei 420° bzw. 60°) auf Null gesetzt (siehe Kurve C)) und zu Beginn der darauffolgenden zweiten Vorschubphase 3 auf die aktuelle Drehzahl B) der Kurbelwelle der Stanzpresse 4 gesetzt (siehe strichpunktierter Pfeil).

Wie anhand der Verläufe der Ist-Position Vorschub (siehe Kurve D)) und Ist-Drehzahl Vorschub (siehe Kurve E)) zu erkennen ist, wird das Vorschubbewegungsprofil mit dem zweiten virtuellen Leitwert C) zu Ende gefahren und die Rotation der Kurbelwelle 4 in der zweiten Vorschubphase 3 im oberen Totpunkt bei 720° bzw. 0° gestoppt (siehe Kurve B)). Wie zu erkennen ist, ist bei dem zweiten virtuellen Leitwert C) die erreichte maximale Ist-Drehzahl E) des Vorschubs nur noch etwa halb so gross wie in der ersten Vorschubphase **3.** Diese Drehzahl des zweiten virtuellen Leitwerts wird am Ende 2 der zweiten Vorschubphase 3 (bei 780° bzw. 60°) auf Null gesetzt (siehe Kurve C)).

Fig. 5 zeigt eine schematische Darstellung der Synchronisationssituation zwischen dem elektronisch definierten Vorschubbewegungsprofil 5 und Rotation der Kurbelwelle 4 der Stanzpresse im Zeitpunkt des Pressenstartsignals 7 und nach erfolgtem Pressenstart bei einem Startsignal 7 innerhalb der Vorschubphase 3 und einer Beschleunigung der Stanzpresse auf eine schnelle Pressenhubzahl (1000 Hübe pro Minute).

Wie der linken Darstellung zu entnehmen ist, welche die Synchronisationssituation zwischen dem elektronisch definierten Vorschubbewegungsprofil 5 und der Rotation der Kurbelwelle der Stanzpresse 4 im Zeitpunkt des Pressenstartsignals 7 zeigt, steht die Presse im vorliegenden Fall beim Auftreten der Startanforderung 7 bei 0° still, d.h. in der Mitte der letzten Vorschubphase 3, während der Vorschub der Stanzpresse die letzte Vorschub-phase vollständig ausgeführt hat und am Ende 2 der letzten Vorschubphase 3 bei 60° steht. Sobald die Startanforderung 7 erkannt ist, wird die Bremse der Stanzpresse geöffnet und die Kupplung geschlossen, und die Kurbelwelle der Presse beginnt zu rotieren und beschleunigt auf die gewünschte Drehzahl.

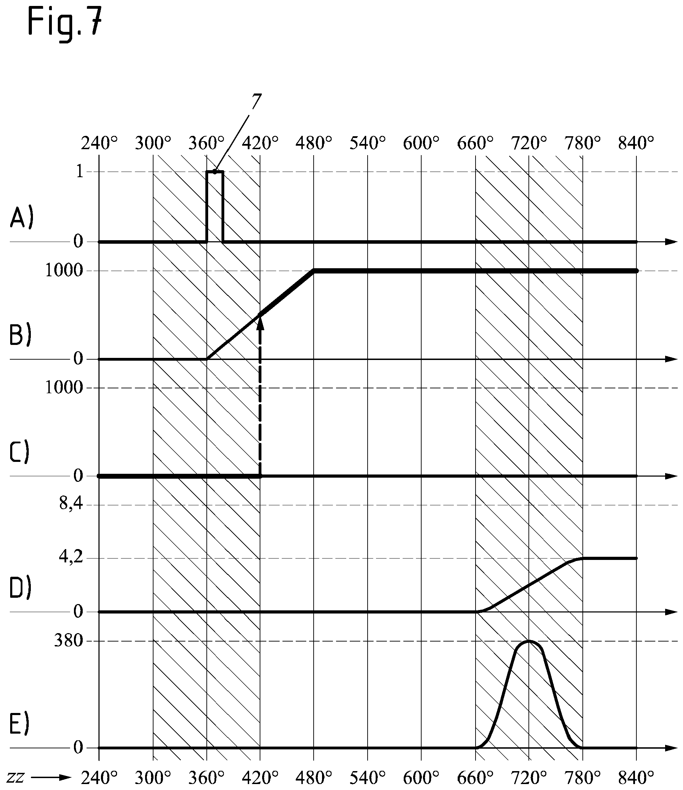

Wie der rechten Darstellung in Fig. 5 in Zusammenschau mit Fig. 7 zu entnehmen ist, welche den Verlauf verschiedener Betriebsparameter über dem Rotationswinkel des Kurbeltriebs der Stanzpresse für die dargestellte Situation zeigt, erfolgt die Synchronisation zwischen dem elektronisch definierten Vorschubbewegungsprofil 5 und der Rotation der Kurbelwelle der Stanzpresse 4 sobald die Rotation der Kurbelwelle 4 das Ende 2 der Vorschubphase bei 60° bzw. 420° erreicht hat (siehe Kurven B) und C) in Fig. 7). Ab diesem Zeitpunkt laufen das Vorschubprofil 5 und die Rotation der Kurbelwelle 4 synchron miteinander, indem die reale Rotation der Kurbelwelle 4 sodann als realer Leitwert B) für das Abfahren des elektronisch definierten Vorschubbewegungsprofils 5 des Servo-Pressenvorschubs dient. Entsprechend wird in der darauffolgenden Vorschubphase das elektronisch definierte Vorschubbewegungsprofil 5 des Servo-Pressenvorschubs synchron zur realen Rotation der Kurbelwelle 4 abgefahren. Die entsprechenden Verläufe der Ist-Position des Vorschubs und der Ist-Drehzahl des Vorschubs sind in den Kurven D) und E) dargestellt.

Fig. 6 zeigt eine schematische Darstellung der Synchronisationssituation zwischen dem elektronisch definierten Vorschubbewegungsprofil 5 und Rotation der Kurbelwelle 4 der Stanzpresse im Zeitpunkt des Pressenstartsignals 7 und nach erfolgtem Pressenstart bei einem Startsignal 7 vor der Vorschubphase 3 und einer Beschleunigung der Stanzpresse auf eine schnelle Pressenhubzahl (1000 Hübe pro Minute).

Wie der linken Darstellung zu entnehmen ist, welche die Synchronisationssituation zwischen dem elektronisch definierten Vorschubbewegungsprofil 5 und der Rotation der Kurbelwelle der Stanzpresse 4 im Zeitpunkt des Pressenstartsignals 7 zeigt, steht die Presse im vorliegenden Fall beim Auftreten der Startanforderung 7 bei 270° still, d.h. 30° vor der kommenden Vorschubphase 3, während der Vorschub der Stanzpresse die letzte Vorschubphase vollständig ausgeführt hat und am Ende 2 der letzten Vorschubphase 3 bei 60° steht. Sobald die Startanforderung 7 erkannt ist, wird die Bremse der Stanzpresse geöffnet und die Kupplung geschlossen, und die Kurbelwelle der Presse beginnt zu rotieren und beschleunigt auf die gewünschte Drehzahl.

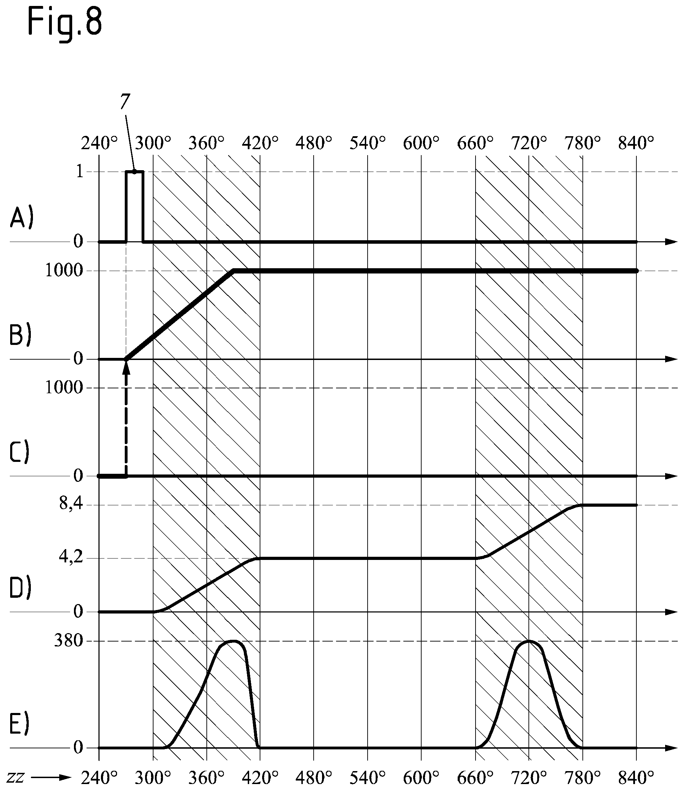

Wie der rechten Darstellung in Zusammenschau mit Fig. 8 zu entnehmen ist, welche den Verlauf verschiedener Betriebsparameter über dem Rotationswinkel des Kurbeltriebs der Stanzpresse für die dargestellte Situation zeigt, erfolgt die Synchronisation zwischen dem elektronisch definierten Vorschubbewegungsprofil 5 und der Rotation der Kurbelwelle der Stanzpresse 4 sobald das Start-signal 7 erkannt ist, d.h. ab Bewegungsstart der Kurbelwelle. Hierzu wird vom virtuellen Leitwert C) auf den realen Leitwert B) umgeschaltet. Ab diesem Zeitpunkt laufen das Vorschubprofil 5 und die Rotation der Kurbelwelle 4 synchron miteinander, indem die reale Rotation der Kurbelwelle 4 als realer Leitwert B) für das Abfahren des elektronisch definierten Vorschubbewegungsprofils 5 des Servo-Pressenvorschubs dient. Entsprechend wird auch in der darauffolgenden Vorschubphase das elektronisch definierte Vorschubbewegungsprofil 5 des Servo-Pressenvorschubs synchron zur realen Rotation der Kurbelwelle 4 abgefahren. Die entsprechenden Verläufe der Ist-Position des Vorschubs und der Ist-Drehzahl des Vorschubs sind in den Kurven D) und E) dargestellt.

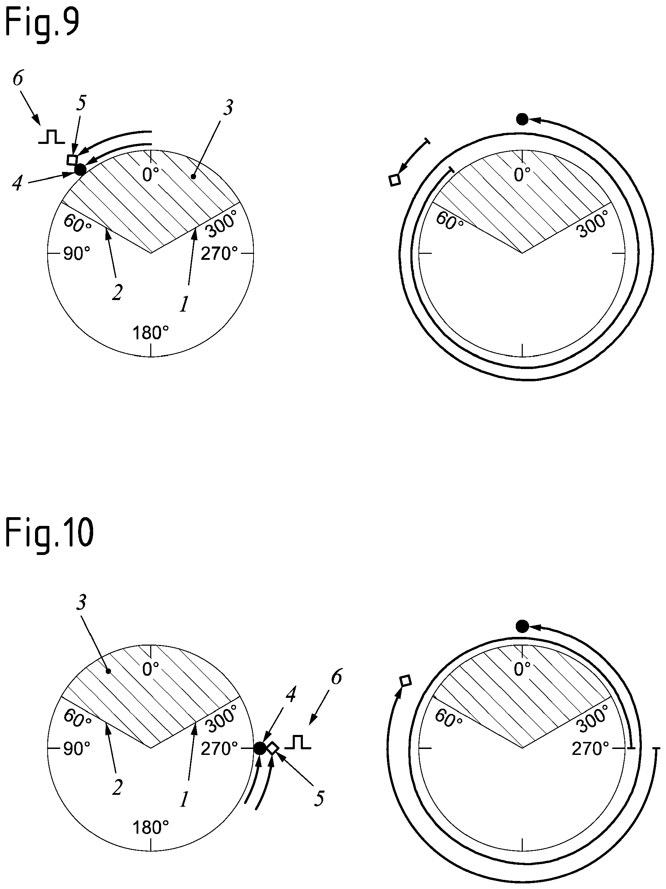

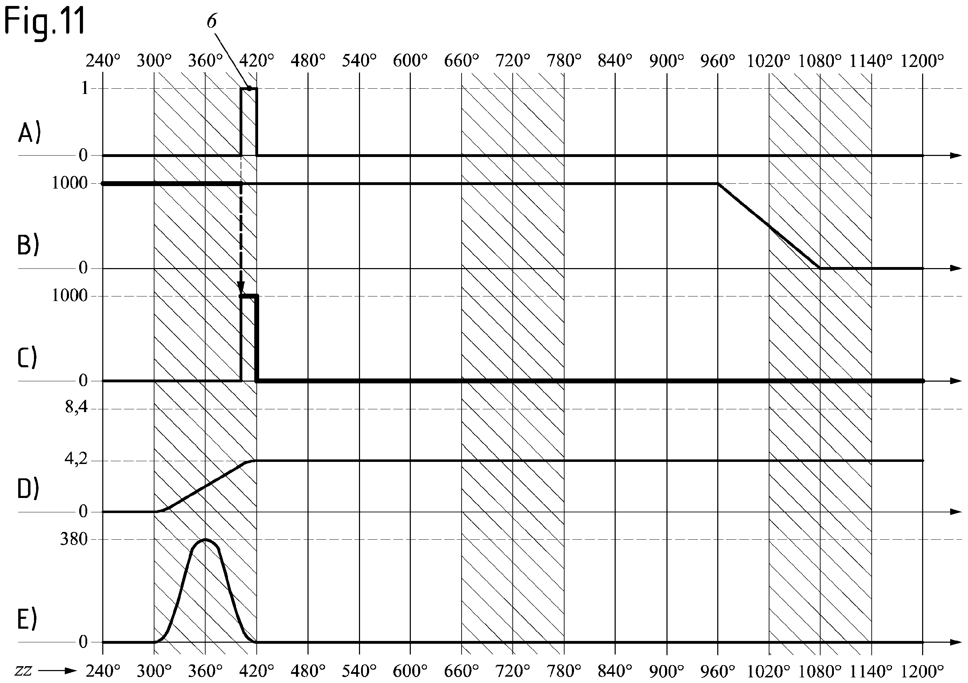

Die Figuren 9 und 11 zeigen Darstellungen wie die Figuren 3a und 4a, jedoch mit einer Stoppanforderung 6 bei 40° bzw. 400°, also gegen Ende der Vorschubphase 3, und zudem für eine Betriebsvariante, bei welcher ein verfrühter Vorschubstopp gewünscht ist, d.h. nach Ausführung der begonnenen Vorschubbewegung bis zur nächsten Startanforderung keine Vorschubbewegung mehr erfolgen soll.

Entsprechend sind die Verläufe der Kurven in Fig. 11 abgesehen von einer leicht anderen Winkellage des Stoppsignals 6 bis zum Beginn 1 der zweiten Vorschubphase 3 praktisch identisch mit denen in Fig. 4a, weshalb hierzu auf die Erläuterungen betreffend die Figuren 3a und 4a in verwiesen werden kann. Da es hier im Gegensatz zu dem Beispiel aus den Figuren 3a und 4a zu keiner weiteren Vorschubbewegung nach Abschluss der ersten Vorschubphase 3 kommt, ändern sich hier die Verläufe der Kurven C), D) und E) nach Abschluss der ersten Vorschubphase 3 nicht mehr.

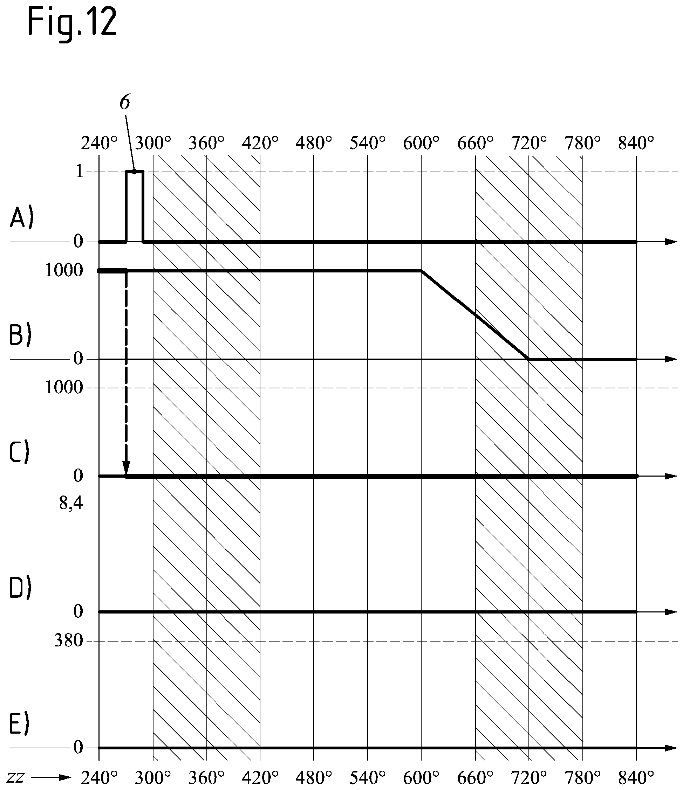

Die Figuren 10 und 12 zeigen Darstellungen wie die Figuren 3b und 4b, jedoch für eine Betriebsvariante, bei welcher ein sofortiger Vorschubstopp gewünscht ist, d.h. bis zur nächsten Startanforderung keine Vorschubbewegung mehr erfolgen soll.

Wie zu erkennen ist, wird sofort nach Erkennen der Stoppanforderung 6 die Synchronisation zwischen dem elektronisch definierten Vorschubbewegungsprofil 5 und der Rotation der Kurbelwelle der Stanzpresse 4, welche über die Drehzahl der Kurbelwelle der Stanzpresse als realer Leitwert erfolgt (siehe Kurve B)), aufgehoben und durch den virtuellen Leitwert ersetzt (siehe Kurve C)), welcher einer Drehzahl von Null entspricht. Dieses Wechseln vom realen Leitwert B) auf den virtuellen Leitwert C) ist in Fig. 12 mit einem gestrichelten Pfeil angedeutet. Wie anhand der Verläufe der Ist-Position Vorschub (siehe Kurve D)) und Ist-Drehzahl Vorschub (siehe Kurve E)) zu erkennen ist, erfolgt bei Eintritt in die Vorschubphase 3 keine Vorschubbewegung. Die Kurbelwelle 4 rotiert ungebremst durch die erste Vorschubphase 3 und wird kurz vor der zweiten Vorschubphase bei 600° abgebremst, so dass sie in der zweiten Vorschubphase im oberen Totpunkt bei 720° gestoppt wird.

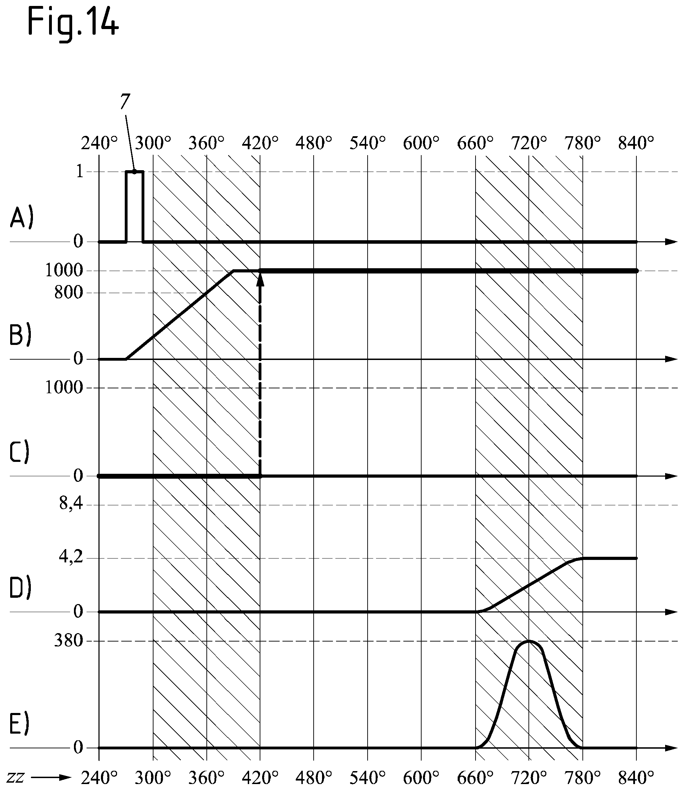

Die Figuren 13 und 14 zeigen Darstellungen wie die Figuren 6 und 8, jedoch für eine Betriebsvariante, bei welcher ein verzögerter Vorschubstart gewünscht ist, z.B. erst nach Erreichen einer bestimmten Mindestdrehzahl B) der Kurbelwelle. In diesem Beispiel ist die erforderliche Mindestdrehzahl der Kurbelwelle 800 Umdrehungen pro Minute. Diese Mindestdrehzahl wird in der Vorschubphase 3 erreicht, weshalb die Synchronisation zwischen dem elektronisch definierten Vorschubbewegungsprofil 5 und der Rotation der Kurbelwelle der Stanzpresse 4, welche über die Drehzahl der Kurbelwelle der Stanzpresse als realer Leitwert für das Abfahren des Vorschubprofils 5 erfolgt (siehe Kurve B)), erst nach Ablauf der Vorschubphase durchgeführt wird und erst in der darauffolgenden zweiten Vorschubphase eine Vorschubbewegung erfolgt. In Fällen, in denen die Mindestdrehzahl ausserhalb der Vorschubphase erreicht wird, erfolgt sofort beim Erreichen derselben die Synchronisation zwischen dem elektronisch definierten Vorschubbewegungsprofil 5 und der Rotation der Kurbelwelle 4.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Betrieb einer Stanzpresse mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse,
wobei im bestimmungsgemässen Stanzbetrieb der Stanzpresse
a) der Pressenstössel von dem Kurbel- oder Exzentertrieb zwischen einem ersten Bewegungstotpunkt (0°), in welchem der Pressenstössel maximal von der Aufspannplatte entfernt ist und das Bearbeitungswerkzeug maximal geöffnet ist, und einem zweiten Bewegungstotpunkt (180°), in welchem der Pressenstössel minimal von der Aufspannplatte entfernt ist und das Bearbeitungswerkzeug maximal geschlossen ist, hin und her bewegt wird,
b) das Materialband in einem ersten Rotationswinkelfenster (3) des Kurbel- oder Exzentertriebs um den ersten Bewegungstotpunkt (0°) herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb des ersten Rotationswinkelfensters (3) vor und bis zu dem zweiten Bewegungstotpunkt (180°) erstreckt, mit dem Bearbeitungswerkzeug bearbeitet wird,
c) die Vorschubbewegung des Servo-Vorschubapparates gemäss einem elektronisch definierten Vorschub-Bewegungsprofil (5) erfolgt, welches in dem ersten Rotationswinkelfenster (3) elektronisch synchronisiert zu der Rotation des Kurbel- oder Exzentertriebs (4) abgefahren wird,
**dadurch gekennzeichnet, dass** bei Auslösen eines Pressenstopps (6) in dem ersten Rotationswinkelfenster (3) die Synchronisation des Vorschub-Bewegungsprofils (5) mit der Rotation des Kurbel- oder Exzentertriebs (4) aufgehoben wird und das Vorschub-Bewegungsprofil (5) unabhängig von der Rotation des Kurbel- oder Exzentertriebs (4) bis zum Ende abgefahren wird.

2. Verfahren nach Anspruch 1, wobei das Vorschub-Bewegungsprofil (5) mit einer Geschwindigkeit bis zum Ende abgefahren wird, welche der Geschwindigkeit entspricht, mit welcher es zum Zeitpunkt des Auslösens des Pressenstopps (6) bzw. zum Zeitpunkt des Auflösens der Synchronisation des Vorschub-Bewegungsprofils (5) mit der Rotation des Kurbel- oder Exzentertriebs (4) abgefahren wurde.

3. Verfahren nach einem der vorangehenden Ansprüche, wobei für den Fall, dass die Rotation des Kurbel- oder Exzentertriebs (4) nach dem Auslösen des Pressenstopps (6) nicht bei einem bestimmten Rotationswinkel vor einem darauffolgenden ersten Rotationswinkelfenster oder vor Eintritt in ein darauffolgendes erstes Rotationswinkelfenster zum Stillstand kommt, das Vorschub-Bewegungsprofil (5) nach Erreichen des darauffolgenden ersten Rotationswinkelfensters erneut vollständig abgefahren wird.

4. Verfahren nach Anspruch 3, wobei das Vorschub-Bewegungsprofil (5) nach Erreichen des darauffolgenden ersten Rotationswinkelfensters (3) erneut mit einer Geschwindigkeit vollständig abgefahren wird, welche der Geschwindigkeit entspricht, mit welcher es bei einer Synchronisation mit der Rotation des Kurbel- oder Exzentertriebs (4) beim Eintritt in dieses darauffolgende erste Rotationswinkelfenster abgefahren würde.

5. Verfahren nach einem der Ansprüche 1 bis 2, wobei für den Fall, dass die Rotation des Kurbel- oder Exzentertriebs (4) nach dem Auslösen des Pressenstopps (6) nicht bei einem bestimmten Rotationswinkel vor einem darauffolgenden ersten Rotationswinkelfenster oder vor Eintritt in ein darauffolgendes erstes Rotationswinkelfenster zum Stillstand kommt und bei diesem bestimmten Rotationswinkel oder bei Eintritt in das darauffolgende erste Rotationswinkelfenster eine oder mehrere Bedingungen nicht erfüllt sind, insbesondere eine bestimmte Rotationsgeschwindigkeit (B)) des Kurbel- oder Exzentertriebs unterschritten ist, bis zu einer erneuten Startanforderung keine weitere Vorschubbewegung des Servo-Vorschubapparates erfolgt.

6. Verfahren nach einem der Ansprüche 1 bis 2, wobei nach dem Auslösen des Pressenstopps (6) und dem vollständigen Abfahren des Vorschub-Bewegungsprofils (5) unabhängig davon, ob die Rotation des Kurbel- oder Exzentertriebs (4) nach dem Auslösen des Pressenstopps (6) bei einem bestimmten Rotationswinkel vor einem darauffolgenden ersten Rotationswinkelfenster oder vor Eintritt in ein darauffolgendes erstes Rotationswinkelfenster zum Stillstand kommt, bis zu einer erneuten Startanforderung (7) keine weitere Vorschubbewegung des Servo-Vorschubapparates erfolgt.

7. Verfahren zum Betrieb einer Stanzpresse mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse,
wobei im bestimmungsgemässen Stanzbetrieb der Stanzpresse
a) der Pressenstössel von dem Kurbel- oder Exzentertrieb zwischen einem ersten Bewegungstotpunkt (0°), in welchem der Pressenstössel maximal von der Aufspannplatte entfernt ist und das Bearbeitungswerkzeug maximal geöffnet ist, und einem zweiten Bewegungstotpunkt (180°), in welchem der Pressenstössel minimal von der Aufspannplatte entfernt ist und das Bearbeitungswerkzeug maximal geschlossen ist, hin und her bewegt wird,
b) das Materialband in einem ersten Rotationswinkelfenster (3) des Kurbel- oder Exzentertriebs um den ersten Bewegungstotpunkt (0°) herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb des ersten Rotationswinkelfensters (3) vor und bis zu dem zweiten Bewegungstotpunkt (180°) erstreckt, mit dem Bearbeitungswerkzeug bearbeitet wird,
c) die Vorschubbewegung des Servo-Vorschubapparates gemäss einem elektronisch definierten Vorschub-Bewegungsprofil (5) erfolgt, welches in dem ersten Rotationswinkelfenster (3) elektronisch synchronisiert zu der Rotation des Kurbel- oder Exzentertriebs (4) abgefahren wird,
**dadurch gekennzeichnet, dass** bei Auslösen eines Pressenstopps (6) ausserhalb des ersten Rotationswinkelfensters (3) für den Fall, dass die Rotation des Kurbel- oder Exzentertriebs (4) nach dem Auslösen des Pressenstopps (6) nicht spätestens bei einem bestimmten Rotationswinkel vor dem darauffolgenden ersten Rotationswinkelfenster oder vor Eintritt in das darauffolgende erste Rotationswinkelfenster zum Stillstand kommt, die Synchronisation des Vorschub-Bewegungsprofils (5) mit der Rotation des Kurbel- oder Exzentertriebs (4) bei Erreichen des ersten Rotationswinkelfensters aufgehoben wird und das Vorschub-Bewegungsprofil (5) sodann unabhängig von der Rotation des Kurbel- oder Exzentertriebs (4) abgefahren wird.

8. Verfahren nach Anspruch 7, wobei das Vorschub-Bewegungsprofil (5) mit einer Geschwindigkeit abgefahren wird, welche der Geschwindigkeit entspricht, mit welcher es zum Zeitpunkt des Auflösens der Synchronisation des Vorschub-Bewegungsprofils mit der Rotation des Kurbel- oder Exzentertriebs (4) abgefahren wurde.

9. Verfahren nach einem der Ansprüche 7 bis 8, wobei für den Fall, dass die Rotation des Kurbel- oder Exzentertriebs (4) nach dem Auslösen des Pressenstopps (6) und dem anschliessenden Abfahren des Vorschub-Bewegungsprofils (5) nicht bei einem bestimmten Rotationswinkel vor dem darauffolgenden ersten Rotationswinkelfenster oder vor Eintritt in das darauffolgende erste Rotationswinkelfenster zum Stillstand kommt, das Vorschub-Bewegungsprofil (5) nach Erreichen des darauffolgenden ersten Rotationswinkelfensters erneut vollständig abgefahren wird.

10. Verfahren nach Anspruch 9, wobei das Vorschub-Bewegungsprofil (5) nach Erreichen des darauffolgenden ersten Rotationswinkelfensters erneut mit einer Geschwindigkeit vollständig abgefahren wird, welche der Geschwindigkeit entspricht, mit welcher es bei einer Synchronisation mit der Rotation des Kurbel- oder Exzentertriebs (4) beim Eintritt in dieses darauffolgende erste Rotationswinkelfenster abgefahren würde.

11. Verfahren nach einem der Ansprüche 7 bis 8, wobei für den Fall, dass die Rotation des Kurbel- oder Exzentertriebs (4) nach dem Auslösen des Pressenstopps (6) und dem anschliessenden Abfahren des Vorschub-Bewegungsprofils (5) nicht bei einem bestimmten Rotationswinkel vor einem darauffolgenden ersten Rotationswinkelfenster oder vor Eintritt in ein darauffolgendes erstes Rotationswinkelfenster zum Stillstand kommt und bei diesem bestimmten Rotationswinkel oder bei Eintritt in das darauffolgende erste Rotationswinkelfenster (3) eine oder mehrere Bedingungen nicht erfüllt sind, insbesondere eine bestimmte Rotationsgeschwindigkeit (B))des Kurbel- oder Exzentertriebs unterschritten ist, bis zu einer erneuten Startanforderung (7) keine weitere Vorschubbewegung des Servo-Vorschubapparates erfolgt.

12. Verfahren nach einem der Ansprüche 7 bis 8, wobei nach dem Auslösen des Pressenstopps (6) und dem anschliessenden Abfahren des Vorschub-Bewegungsprofils (5) unabhängig davon, ob die Rotation des Kurbel- oder Exzentertriebs (4) bei einem bestimmten Rotationswinkel vor einem darauffolgenden ersten Rotationswinkelfenster oder vor Eintritt in ein darauffolgendes erstes Rotationswinkelfenster zum Stillstand kommt, bis zu einer erneuten Startanforderung (7) keine weitere Vorschubbewegung des Servo-Vorschubapparates erfolgt.

13. Verfahren zum Betrieb einer Stanzpresse mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse,
wobei im bestimmungsgemässen Stanzbetrieb der Stanzpresse
a) der Pressenstössel von dem Kurbel- oder Exzentertrieb zwischen einem ersten Bewegungstotpunkt (0°), in welchem der Pressenstössel maximal von der Aufspannplatte entfernt ist und das Bearbeitungswerkzeug maximal geöffnet ist, und einem zweiten Bewegungstotpunkt (180°), in welchem der Pressenstössel minimal von der Aufspannplatte entfernt ist und das Bearbeitungswerkzeug maximal geschlossen ist, hin und her bewegt wird,
b) das Materialband in einem ersten Rotationswinkelfenster (3) des Kurbel- oder Exzentertriebs um den ersten Bewegungstotpunkt (0°) herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb des ersten Rotationswinkelfensters (3) vor und bis zu dem zweiten Bewegungstotpunkt (180°) erstreckt, mit dem Bearbeitungswerkzeug bearbeitet wird,
c) die Vorschubbewegung des Servo-Vorschubapparates gemäss einem elektronisch definierten Vorschub-Bewegungsprofil (5) erfolgt, welches in dem ersten Rotationswinkelfenster (3) elektronisch synchronisiert zu der Rotation des Kurbel- oder Exzentertriebs (4) abgefahren wird,
**dadurch gekennzeichnet, dass** bei Auslösen eines Pressenstopps (6) ausserhalb des ersten Rotationswinkelfensters (3) die Synchronisation des Vorschub-Bewegungsprofils (5) mit der Rotation des Kurbel- oder Exzentertriebs (4) aufgehoben wird und bis zu einer erneuten Startanforderung (7) keine weitere Vorschubbewegung des Servo-Vorschubapparates erfolgt.

14. Verfahren nach einem der vorangehenden Ansprüche, wobei nach dem Ausführen des Pressenstopps beim Neustarten der Presse zur Wiederaufnahme des bestimmungsgemässen Stanzbetriebs eine insbesondere mit der Rotation des Kurbel- oder Exzentertriebs synchronisierte Vorschubbewegung des Servo-Vorschubapparates frühestens in dem nächstfolgenden ersten Rotationswinkelfenster erfolgt.

15. Verfahren nach Anspruch 13, wobei die Vorschubbewegung erst dann erfolgt, wenn bei einem bestimmten Rotationswinkel vor einem darauffolgenden ersten Rotationswinkelfenster oder beim Eintritt in das nächstfolgende erste Rotationswinkelfenster oder ein darauffolgendes erstes Rotationswinkelfenster eine oder mehrere Bedingungen erfüllt sind, insbesondere eine bestimmte Rotationsgeschwindigkeit (B)) des Kurbel- oder Exzentertriebs erreicht ist.

16. Stanzpresse zum Betrieb nach einem der vorangehenden Verfahren, mit einem von einem Kurbel- oder Exzentertrieb angetriebenen Pressenstössel mit einem ersten Teil eines Bearbeitungswerkzeugs, wobei der Pressenstössel in einer Bearbeitungszone der Stanzpresse gegen eine feststehende Aufspannplatte mit einem zugeordneten zweiten Teil des Bearbeitungswerkzeugs arbeitet, und mit einem Servo-Vorschubapparat zum intermittierenden Zuführen eines zu bearbeitenden Materialbandes zur Bearbeitungszone der Stanzpresse,
wobei im bestimmungsgemässen Stanzbetrieb der Stanzpresse
a) der Pressenstössel von dem Kurbel- oder Exzentertrieb zwischen einem ersten Bewegungstotpunkt (0°), in welchem der Pressenstössel maximal von der Aufspannplatte entfernt ist und das Bearbeitungswerkzeug maximal geöffnet ist, und einem zweiten Bewegungstotpunkt (180°), in welchem der Pressenstössel minimal von der Aufspannplatte entfernt ist und das Bearbeitungswerkzeug maximal geschlossen ist, hin und her bewegt wird,
b) das Materialband in einem ersten Rotationswinkelfenster (3) des Kurbel- oder Exzentertriebs um den ersten Bewegungstotpunkt (0°) herum von dem Servo-Vorschubapparat um eine bestimmte Länge in die Bearbeitungszone vorgeschoben wird und in den Vorschubpausen in einem zweiten Rotationswinkelfenster des Kurbel- oder Exzentertriebs, welches sich ausserhalb der ersten Rotationswinkelfensters (3) vor und bis zu dem zweiten Bewegungstotpunkt (180°) erstreckt, mit dem Bearbeitungswerkzeug bearbeitet wird,
c) die Vorschubbewegung des Servo-Vorschubapparates gemäss einem elektronisch definierten Vorschub-Bewegungsprofil (5) erfolgt, welches in dem ersten Rotationswinkelfenster (3) elektronisch synchronisiert zu der Rotation des Kurbel- oder Exzentertriebs (4) abgefahren wird,
**dadurch gekennzeichnet, dass** die Stanzpresse eine Steuerung umfasst,
welche bei Auslösen eines Pressenstopps (6) in dem ersten Rotationswinkelfenster (3) die Synchronisation des Vorschub-Bewegungsprofils (5) mit der Rotation des Kurbel- oder Exzentertriebs (4) aufhebt und das Vorschub-Bewegungsprofil (5) unabhängig von der Rotation des Kurbel- oder Exzentertriebs (4) bis zum Ende abfahren lässt,
und/oder
welche bei Auslösen eines Pressenstopps (6) ausserhalb des ersten Rotationswinkelfensters (3) für den Fall, dass die Rotation des Kurbel- oder Exzentertriebs (4) nach dem Auslösen des Pressenstopps (6) nicht bei einem bestimmten Rotationswinkel vor dem darauffolgenden ersten Rotationswinkelfenster oder vor Eintritt in das darauffolgende erste Rotationswinkelfenster zum Stillstand kommt, die Synchronisation des Vorschub-Bewegungsprofils (5) mit der Rotation des Kurbel- oder Exzentertriebs (4) bei Erreichen des ersten Rotationswinkelfensters aufhebt und das Vorschub-Bewegungsprofil (5) sodann unabhängig von der Rotation des Kurbel- oder Exzentertriebs (4) abfahren lässt.

## Claims

1. Method for operating a punching press with a press plunger driven by a crank or eccentric drive with a first part of a machining tool, wherein the press plunger operates in a machining zone of the punching press against a stationary clamping plate with an associated second part of the machining tool, and with a servo feed apparatus for intermittently feeding a band of material to be machined to the machining zone of the punching press,
wherein in the intended punching operation of the punching press
a) the press plunger is moved back and forth by the crank or eccentric drive between a first movement dead point (0°), in which the press plunger is at maximum distance from the clamping plate and the machining tool is at maximum opening, and a second movement dead point (180°), in which the press plunger is at minimum distance from the clamping plate and the machining tool is at maximum closing,
b) the material band is advanced in a first rotation angle window (3) of the crank or eccentric drive around the first movement dead point (0°) by the servo feed apparatus by a certain length into the machining zone and is machined with the machining tool in the feed pauses in a second rotation angle window of the crank or eccentric drive, which extends outside the first rotation angle window (3) before and up to the second movement dead point (180°),
c) the feed movement of the servo feed apparatus takes place according to an electronically defined feed movement profile (5), which is followed electronically synchronized with the rotation of the crank or eccentric drive (4) in the first rotation angle window (3),
**characterized in that** when a press stop (6) is triggered in the first rotation angle window (3), the synchronization of the feed movement profile (5) with the rotation of the crank or eccentric drive (4) is cancelled and the feed movement profile (5) is followed to the end independently of the rotation of the crank or eccentric drive (4).

2. Method according to claim 1, wherein the feed movement profile (5) is followed to the end at a rotation speed which corresponds to the rotation speed at which it was followed at the time of triggering the press stop (6) or at the time of cancelling the synchronization of the feed movement profile (5) with the rotation of the crank or eccentric drive (4).

3. Method according to one of the preceding claims, wherein, in the event that the rotation of the crank or eccentric drive (4) does not come to a standstill at a certain rotation angle before a subsequent first rotation angle window or before entry into a subsequent first rotation angle window after the press stop (6) has been triggered, the feed movement profile (5) is again fully continuously followed after reaching the subsequent first rotation angle window.

4. Method according to claim 3, wherein the feed movement profile (5), after reaching the subsequent first rotation angle window (3), is again followed completely at a rotation speed which corresponds to the rotation speed at which it would be followed in the case of a synchronization with the rotation of the crank or eccentric drive (4) when entering this subsequent first rotation angle window.

5. Method according to one of claims 1 to **2,** wherein, in the event that after triggering the press stop (6) the rotation of the crank or eccentric drive (4) does not come to a standstill at a specific rotation angle before a subsequent first rotation angle window or before entry into a subsequent first rotation angle window and one or more conditions are not fulfilled at this specific rotation angle or upon entry into the subsequent first rotation angle window, in particular the rotational rotation speed falls below a certain rotational rotation speed (B) of the crank or eccentric drive, no further feed movement of the servo feed apparatus takes place until a new start request is made.

6. Method according to one of the claims 1 to 2, wherein after the triggering of the press stop (6) and the complete following of the feed movement profile (5), irrespective of whether the rotation of the crank or eccentric drive (4) comes to a standstill after the triggering of the press stop (6) at a certain rotation angle before a subsequent first rotation angle window or before entry into a subsequent first rotation angle window, no further feed movement of the servo feed apparatus takes place until a new start request (7).

7. Method for operating a punching press with a press plunger driven by a crank or eccentric drive with a first part of a machining tool, wherein the press plunger works in a machining zone of the punching press against a stationary clamping plate with an associated second part of the machining tool, and with a servo feed apparatus for intermittently feeding a band of material to be machined to the machining zone of the punching press,
wherein in the intended punching operation of the punching press
a) the press plunger is moved back and forth by the crank or eccentric drive between a first movement dead point (0°), in which the press plunger is at maximum distance from the clamping plate and the machining tool is at maximum opening, and a second movement dead point (180°), in which the press plunger is at minimum distance from the clamping plate and the machining tool is at maximum closing,
b) the material band is advanced into the machining zone by a certain length in a first rotation angle window (3) of the crank or eccentric drive around the first movement dead point (0°) by the servo feed apparatus and is machined with the machining tool in the feed pauses in a second rotation angle window of the crank or eccentric drive, which extends outside the first rotation window (3) before and up to the second movement dead point (180°),
c) the feed movement of the servo feed apparatus takes place according to an electronically defined feed movement profile (5), which is electronically synchronized to the rotation of the crank or eccentric drive (4) in the first rotation angle window (3),
**characterized in that** when a press stop (6) is triggered outside the first rotation angle window (3), in the event that the rotation of the crank or eccentric drive (4) after the triggering of the press stop (6) does not come to a standstill latest at a certain rotation angle before the subsequent first rotation angle window or before entry into the subsequent first rotation angle window, the synchronization of the feed movement profile (5) with the rotation of the crank or eccentric drive (4) is cancelled when the first rotation angle window is reached and the feed movement profile (5) is then followed independently of the rotation of the crank or eccentric drive (4).

8. Method according to claim 7, wherein the feed movement profile (5) is followed at a rotation speed which corresponds to the rotation speed at which it was followed at the time of cancelling the synchronization of the feed movement profile with the rotation of the crank or eccentric drive (4).

9. Method according to one of the claims 7 to 8, wherein in the event that the rotation of the crank or eccentric drive (4) does not come to a standstill at a certain rotation angle before the subsequent first rotation angle window or before entry into the subsequent first rotation angle window after the triggering of the press stop (6) and the subsequent following of the feed movement profile (5), the feed movement profile (5) is again fully continuously followed after reaching the following first rotation angle window.

10. Method according to claim 9, wherein the feed movement profile (5), after reaching the subsequent first rotation angle window, is again completely followed at a rotation speed which corresponds to the rotation speed at which it would be followed when synchronized with the rotation of the crank or eccentric drive (4) upon entry into this subsequent first rotation angle window.

11. Method according to one of the claims 7 to 8, wherein in the case that after the triggering of the press stop (6) and the subsequent following of the feed movement profile (5) the rotation of the crank or eccentric drive (4) does not stop at a certain rotation angle before a subsequent first rotation angle window or before entry into a subsequent first rotation angle window and one or more conditions are not fulfilled at this particular rotation angle or upon entry into the subsequent first rotation angle window (3), in particular the rotational rotation speed falls short of a certain rotational rotation speed (B) of the crank or eccentric drive, no further feed movement of the servo feed apparatus takes place until a first new start request (7).

12. Method according to one of claims 7 to **8,** wherein after the triggering of the press stop (6) and the subsequent following of the feed movement profile (5) independently whether the rotation of the crank or external drive (4) comes to a standstill at a certain rotation angle before a subsequent first rotation angle window or before entry into a subsequent first rotation angle window, no further feed movement of the servo feed apparatus takes place until a new start request (7).

13. Method for operating a punching press with a press plunger driven by a crank or eccentric drive with a first part of a machining tool, wherein the press plunger works in a machining zone of the punching press against a stationary clamping plate with an associated second part of the machining tool, and with a servo feed apparatus for intermittently feeding a band of material to be machined to the machining zone of the punching press,
wherein in the intended punching operation of the punching press
a) the press plunger is moved back and forth by the crank or eccentric drive between a first movement dead point (0°), in which the press plunger is at maximum distance from the clamping plate and the machining tool is at maximum opening, and a second movement dead point (180°), in which the press plunger is at minimum distance from the clamping plate and the machining tool is at maximum closing,
b) the material band is advanced into the machining zone by a certain length in a first rotation angle window (3) of the crank or eccentric drive around the first movement dead point (0°) by the servo feed apparatus and is machined with the machining tool in the feed pauses in a second rotation angle window of the crank or eccentric drive, which extends outside the first rotation window (3) before and up to the second movement dead point (180°),
c) the feed movement of the servo feed apparatus takes place according to an electronically defined feed movement profile (5), which is electronically synchronized to the rotation of the crank or eccentric drive (4) in the first rotation angle window (3),
**characterized in that** when a press stop (6) is triggered outside the first rotation angle window (3), the synchronization of the feed movement profile (5) with the rotation of the crank or eccentric drive (4) is cancelled and no further feed movement of the servo feed apparatus takes place until a new start request (7) is made.

14. Method according to one of the preceding claims, wherein, when the press is restarted in order to resume the intended punching operation after the press stop has been carried out, a feed movement of the servo feed apparatus, in particular synchronized with the rotation of the crank or eccentric drive, takes place at the earliest in the next following first rotation angle window.

15. Method according to claim 13, wherein the feed movement only takes place when one or more conditions are fulfilled at a specific rotation angle before a subsequent first rotation angle window or when entering the next subsequent first rotation angle window or a subsequent first rotation angle window, in particular a specific rotation speed (B) of the crank or eccentric drive is reached.

16. Punching press for operation according to one of the preceding methods, with a press plunger driven by a crank or eccentric drive with a first part of a machining tool, the press plunger operating in a machining zone of the punching press against a stationary clamping plate with an associated second part of the machining tool, and with a servo feed apparatus for intermittently feeding a band of material to be machined to the machining zone of the punching press.
whereby in the intended punching operation of the punching press
a) the press plunger is moved back and forth by the crank or eccentric drive between a first movement dead point (0°), in which the press plunger is at maximum distance from the clamping plate and the machining tool is at maximum opening, and a second movement dead point (180°), in which the press plunger is at minimum distance from the clamping plate and the machining tool is at maximum closing,
b) the material band is advanced into the machining zone by a certain length in a first rotation angle window (3) of the crank or eccentric drive around the first movement dead point (0°) by the servo feed apparatus and is machined with the machining tool in the feed pauses in a second rotation angle window of the crank or eccentric drive, which extends outside the first rotation window (3) before and up to the second movement dead point (180°),
c) the feed movement of the servo feed apparatus takes place according to an electronically defined feed movement profile (5), which is electronically synchronized to the rotation of the crank or eccentric drive (4) in the first rotation angle window (3),
**characterized in that** the punching press comprises a control unit,
which, when a press stop (6) is triggered in the first rotation angle window (3), cancels the synchronization of the feed movement profile (5) with the rotation of the crank or eccentric drive (4) and allows the feed movement profile (5) to travel to the end independently of the rotation of the crank or eccentric drive (4),
and/or
which, when a press stop (6) is triggered outside the first rotation angle window (3), in the event that the rotation of the crank or eccentric drive (4) after the triggering of the press stop (6) does not come to a standstill at a specific rotation angle before the subsequent first rotation angle window or before entry into the subsequent first rotation angle window, cancels the synchronization of the feed movement profile (5) with the rotation of the crank or eccentric drive (4) when the first rotation angle window is reached and then allows the feed movement profile (5) to move independently of the rotation of the crank or eccentric drive (4).

## Revendications

1. Procédé pour faire fonctionner une presse à poinçonner avec un coulisseau de presse entraîné par un mécanisme à manivelle ou à excentrique avec une première partie d'un outil d'usinage, dans lequel le coulisseau de presse agit dans une zone d'usinage de la presse à poinçonner contre une plaque de serrage fixe avec une deuxième partie associée de l'outil d'usinage, et avec un dispositif d'avance servo pour amener de manière intermittente une bande de matériau à usiner dans la zone d'usinage de la presse à poinçonner,
dans lequel, lors de l'opération de poinçonnage prévue de la presse à poinçonner
a) le coulisseau de presse est déplacé en va-et-vient par l'entraînement à manivelle ou excentrique entre un premier point mort de mouvement (0°) dans lequel le coulisseau de presse se trouve à la distance maximale de la plaque de serrage et l'outil d'usinage est à l'ouverture maximale, et un deuxième point mort de mouvement (180°) dans lequel le coulisseau de presse se trouve à la distance minimale de la plaque de serrage et l'outil d'usinage est à la fermeture maximale,
b) la bande de matériau est avancée dans une première fenêtre d'angle de rotation (3) de l'entraînement à manivelle ou excentrique autour du premier point mort de mouvement (0°) par le dispositif d'avance servo d'une certaine longueur dans la zone d'usinage et est usinée avec l'outil d'usinage pendant les pauses d'avance dans une deuxième fenêtre d'angle de rotation de l'entraînement à manivelle ou excentrique, qui s'étend à l'extérieur de la première fenêtre d'angle de rotation (3) avant et jusqu'au deuxième point mort de mouvement (180°),
c) le mouvement d'avance du dispositif d'avance servo s'effectue selon un profil de mouvement d'avance (5) défini électroniquement, qui est suivi de manière synchronisée électroniquement avec la rotation de l'entraînement à manivelle ou excentrique (4) dans la première fenêtre d'angle de rotation (3),
**caractérisé en ce que** lorsqu'un arrêt de presse (6) est déclenché dans la première fenêtre d'angle de rotation (3), la synchronisation du profil de mouvement d'avance (5) avec la rotation de l'entraînement à manivelle ou excentrique (4) est annulée et le profil de mouvement d'avance (5) est suivi jusqu'à la fin indépendamment de la rotation de l'entraînement à manivelle ou excentrique (4).

2. Procédé selon la revendication 1, dans lequel le profil de mouvement d'avance (5) est suivi jusqu'à la fin à une vitesse de rotation qui correspond à la vitesse de rotation à laquelle il était suivi au moment du déclenchement de l'arrêt de presse (6) ou au moment de l'annulation de la synchronisation du profil de mouvement d'avance (5) avec la rotation de l'entraînement à manivelle ou excentrique (4).

3. Procédé selon l'une des revendications précédentes, dans lequel, dans le cas où la rotation de l'entraînement à manivelle ou excentrique (4) ne s'arrête pas à un certain angle de rotation avant une première fenêtre d'angle de rotation suivante ou avant l'entrée dans une première fenêtre d'angle de rotation suivante après le déclenchement de l'arrêt de la presse (6), le profil de mouvement d'avance (5) est à nouveau suivi de manière continue après avoir atteint la première fenêtre d'angle de rotation suivante.

4. Procédé selon la revendication 3, dans lequel le profil de mouvement d'avance (5), après avoir atteint la fenêtre d'angle de rotation suivante (3), est à nouveau suivi complètement à une vitesse de rotation qui correspond à la vitesse de rotation à laquelle il serait suivi dans le cas d'une synchronisation avec la rotation de l'entraînement à manivelle ou excentrique (4) à l'entrée dans cette fenêtre d'angle de rotation suivante.

5. Procédé selon l'une des revendications 1 à 2, dans lequel, dans le cas où, après le déclenchement de l'arrêt de presse (6), la rotation de l'entraînement à manivelle ou excentrique (4) ne s'arrête pas à un angle de rotation spécifique avant une fenêtre d'angle de rotation suivante ou avant l'entrée dans une fenêtre d'angle de rotation suivante et une ou plusieurs conditions ne sont pas remplies à cet angle de rotation spécifique ou lors de l'entrée dans la fenêtre d'angle de rotation suivante, en particulier si la vitesse de rotation descend en dessous d'une certaine vitesse de rotation (B) de l'entraînement à manivelle ou excentrique, aucun mouvement d'avance supplémentaire du dispositif d'avance servo n'a lieu jusqu'à ce qu'une nouvelle demande de démarrage soit émise.

6. Procédé selon l'une des revendications 1 à 2, dans lequel, après le déclenchement de l'arrêt de presse (6) et le suivi complet du profil de mouvement d'avance (5), n'importe si la rotation de l'entraînement à manivelle ou excentrique (4) s'arrête ou non après le déclenchement de l'arrêt de presse (6) à un certain angle de rotation avant une première fenêtre d'angle de rotation suivante ou avant l'entrée dans une première fenêtre d'angle de rotation suivante, aucun mouvement d'avance supplémentaire du dispositif d'avance servo n'a lieu jusqu'à une nouvelle demande de démarrage (7).

7. Procédé pour faire fonctionner une presse à poinçonner avec un coulisseau de presse entraîné par un entraînement à manivelle ou à excentrique avec une première partie d'un outil d'usinage, dans lequel le coulisseau de presse travaille dans une zone d'usinage de la presse à poinçonner contre une plaque de serrage fixe avec une deuxième partie associée de l'outil d'usinage, et avec un dispositif d'avance servo pour avancer par intermittence une bande de matériau à usiner vers la zone d'usinage de la presse à poinçonner,
dans lequel, lors de l'opération de poinçonnage prévue de la presse à poinçonner
a) le coulisseau de presse est déplacé en va-et-vient par l'entraînement à manivelle ou excentrique entre un premier point mort de mouvement (0°) dans lequel le coulisseau de presse se trouve à la distance maximale de la plaque de serrage et l'outil d'usinage est à l'ouverture maximale, et un deuxième point mort de mouvement (180°) dans lequel le coulisseau de presse se trouve à la distance minimale de la plaque de serrage et l'outil d'usinage est à la fermeture maximale,
b) la bande de matériau est avancée dans la zone d'usinage d'une certaine longueur dans une première fenêtre d'angle de rotation (3) de l'entraînement à manivelle ou excentrique autour du point mort du premier mouvement (0°) par le dispositif d'avance servo et est usiné avec l'outil d'usinage pendant les pauses d'avance dans une deuxième fenêtre d'angle de rotation de l'entraînement à manivelle ou excentrique, qui s'étend à l'extérieur de la première fenêtre de rotation (3) avant et jusqu'au deuxième point mort de mouvement (180°),
c) le mouvement d'avance du dispositif d'avance servo s'effectue selon un profil de mouvement d'avance (5) défini électroniquement, qui est synchronisé électroniquement avec la rotation de l'entraînement à manivelle ou excentrique (4) dans la première fenêtre d'angle de rotation (3),
**caractérisé en ce que** lorsqu'un arrêt de presse (6) est déclenché en dehors de la première fenêtre d'angle de rotation (3), dans le cas où la rotation de l'entraînement à manivelle ou excentrique (4) après le déclenchement de l'arrêt de presse (6) ne s'arrête pas au plus tard à un certain angle de rotation avant la fenêtre d'angle de rotation suivante ou avant l'entrée dans la fenêtre d'angle de rotation suivante, la synchronisation du profil de mouvement d'avance (5) avec la rotation de l'entraînement à manivelle ou excentrique (4) est annulée lorsque la première fenêtre d'angle de rotation est atteinte et le profil de mouvement d'avance (5) est alors suivi indépendamment de la rotation de l'entraînement à manivelle ou excentrique (4).

8. Procédé selon la revendication 7, dans lequel le profil de mouvement d'avance (5) est suivi à une vitesse de rotation qui correspond à la vitesse de rotation à laquelle il était suivi au moment de l'annulation de la synchronisation du profil de mouvement d'avance avec la rotation de la manivelle ou de l'entraînement excentrique (4).

9. Procédé selon l'une des revendications 7 à 8, dans lequel, dans le cas où la rotation de l'entraînement à manivelle ou excentrique (4) ne s'arrête pas à un certain angle de rotation avant la fenêtre d'angle de rotation suivante ou avant l'entrée dans la fenêtre d'angle de rotation suivante après le déclenchement de l'arrêt de presse (6) et le suivi ultérieur du profil de mouvement d'avance (5), le profil de mouvement d'avance (5) est à nouveau suivi de manière continue après avoir atteint la fenêtre d'angle de rotation suivante.

10. Procédé selon la revendication 9, dans lequel le profil de mouvement d'avance (5), après avoir atteint la fenêtre d'angle de rotation suivante, est à nouveau suivi complètement à une vitesse de rotation qui correspond à la vitesse de rotation à laquelle il serait suivi s'il était synchronisé avec la rotation de l'entraînement à manivelle ou excentrique (4) lors de l'entrée dans cette fenêtre d'angle de rotation suivante.

11. Procédé selon l'une des revendications 7 à 8, dans lequel, dans le cas où, après le déclenchement de l'arrêt de presse (6) et le suivi ultérieur du profil de mouvement d'avance (5), la rotation de l'entraînement à manivelle ou excentrique (4) ne s'arrête pas à un certain angle de rotation avant une première fenêtre d'angle de rotation suivante ou avant l'entrée dans une première fenêtre d'angle de rotation suivante et une ou plusieurs conditions ne sont pas remplies à cet angle de rotation particulier ou à l'entrée dans la première fenêtre d'angle de rotation suivante (3), en particulier si la vitesse de rotation est inférieure à une certaine vitesse de rotation (B) de l'entraînement à manivelle ou excentrique, aucun mouvement d'avance supplémentaire du dispositif d'avance servo n'a lieu jusqu'à une première nouvelle demande de démarrage (7).

12. Procédé selon l'une des revendications 7 à 8, dans lequel, après le déclenchement de l'arrêt de presse (6) et le suivi ultérieur du profil de mouvement d'avance (5), indépendamment du fait que la rotation de l'entraînement à manivelle ou externe (4) s'arrête à un certain angle de rotation avant une première fenêtre d'angle de rotation suivante ou avant l'entrée dans une première fenêtre d'angle de rotation suivante, aucun mouvement d'avance supplémentaire du dispositif d'avance servo n'a lieu jusqu'à une nouvelle demande de démarrage (7).

13. Procédé pour faire fonctionner une presse à poinçonner avec un coulisseau de presse entraîné par un entraînement à manivelle ou excentrique avec une première partie d'un outil d'usinage, dans lequel le coulisseau de presse travaille dans une zone d'usinage de la presse à poinçonner contre une plaque de serrage fixe avec une deuxième partie associée de l'outil d'usinage, et avec un dispositif d'avance servo pour avancer de manière intermittente une bande de matériau à usiner vers la zone d'usinage de la presse à poinçonner,
dans lequel, lors de l'opération de poinçonnage prévue de la presse à poinçonner
a) le coulisseau de presse est déplacé en va-et-vient par l'entraînement à manivelle ou excentrique entre un premier point mort de mouvement (0°) dans lequel le coulisseau de presse se trouve à la distance maximale de la plaque de serrage et l'outil d'usinage est à l'ouverture maximale, et un deuxième point mort de mouvement (180°) dans lequel le coulisseau de presse se trouve à la distance minimale de la plaque de serrage et l'outil d'usinage est à la fermeture maximale,
b) la bande de matériau est avancée dans la zone d'usinage d'une certaine longueur dans une première fenêtre d'angle de rotation (3) de l'entraînement à manivelle ou excentrique autour du premier point mort de mouvement (0°) par le dispositif d'avance servo et est usinée avec l'outil d'usinage pendant les pauses d'avance dans une deuxième fenêtre d'angle de rotation de l'entraînement à manivelle ou excentrique, qui s'étend à l'extérieur de la première fenêtre de rotation (3) avant et jusqu'au deuxième point mort de mouvement (180°),
c) le mouvement d'avance du dispositif d'avance servo s'effectue selon un profil de mouvement d'avance (5) défini électroniquement, qui est synchronisé électroniquement avec la rotation de l'entraînement à manivelle ou excentrique (4) dans la première fenêtre d'angle de rotation (3),
**caractérisé en ce que** lorsqu'un arrêt de presse (6) est déclenché en dehors de la première fenêtre d'angle de rotation (3), la synchronisation du profil de mouvement d'avance (5) avec la rotation de l'entraînement à manivelle ou excentrique (4) est annulée et aucun autre mouvement d'avance du dispositif d'avance servo n'a lieu jusqu'à ce qu'une nouvelle demande de démarrage (7) soit émise.

14. Procédé selon l'une des revendications précédentes, dans lequel, lorsque la presse est redémarrée afin de reprendre l'opération de poinçonnage prévue après l'arrêt de la presse, un mouvement d'avance du dispositif d'avance servo, en particulier synchronisé avec la rotation de l'entraînement à manivelle ou excentrique, a lieu au plus tôt dans la première fenêtre d'angle de rotation suivante.

15. Procédé selon la revendication 13, dans lequel le mouvement d'avance n'a lieu que lorsqu'une ou plusieurs conditions sont remplies à un angle de rotation spécifique avant une fenêtre d'angle de rotation suivante ou lors de l'entrée dans la fenêtre d'angle de rotation suivante ou dans une fenêtre d'angle de rotation suivante, en particulier lorsqu'une vitesse de rotation spécifique (B) de la manivelle ou de l'entraînement excentrique est atteinte.

16. Presse à poinçonner pour fonctionner selon l'un des procédés précédents, avec un coulisseau de presse entraîné par un entraînement à manivelle ou excentrique avec une première partie d'un outil d'usinage, le coulisseau de presse agissant dans une zone d'usinage de la presse à poinçonner contre une plaque de serrage fixe avec une deuxième partie associée de l'outil d'usinage, et avec un dispositif d'avance servo pour avancer de manière intermittente une bande de matériau à usiner vers la zone d'usinage de la presse à poinçonner
dans laquelle, lors de l'opération de poinçonnage prévue de la presse à poinçonner
a) le coulisseau de presse est déplacé en va-et-vient par l'entraînement à manivelle ou excentrique entre un premier point mort de mouvement (0°) dans lequel le coulisseau de presse se trouve à la distance maximale de la plaque de serrage et l'outil d'usinage est à l'ouverture maximale, et un deuxième point mort de mouvement (180°) dans lequel le coulisseau de presse est à la distance minimale de la plaque de serrage et l'outil d'usinage est à la fermeture maximale,
b) la bande de matériau est avancée dans la zone d'usinage d'une certaine longueur dans une première fenêtre d'angle de rotation (3) de l'entraînement à manivelle ou excentrique autour du premier point mort de mouvement (0°) par le dispositif d'avance servo et est usinée avec l'outil d'usinage pendant les pauses d'avance dans une deuxième fenêtre d'angle de rotation de l'entraînement à manivelle ou excentrique, qui s'étend à l'extérieur de la première fenêtre de rotation (3) avant et jusqu'au deuxième point mort de mouvement (180°),
c) le mouvement d'avance du dispositif d'avance servo s'effectue selon un profil de mouvement d'avance (5) défini électroniquement, qui est synchronisé électroniquement avec la rotation de l'entraînement à manivelle ou excentrique (4) dans la première fenêtre angulaire de rotation (3),
**caractérisé en ce que** la presse à poinçonner comprend une unité de commande,
qui, lorsqu'un arrêt de presse (6) est déclenché dans la première fenêtre d'angle de rotation (3), annule la synchronisation du profil de mouvement d'avance (5) avec la rotation de l'entraînement à manivelle ou excentrique (4) et permet au profil de mouvement d'avance (5) de se déplacer jusqu'à la fin indépendamment de la rotation de l'entraînement à manivelle ou excentrique (4),
et/ou
qui, lorsqu'un arrêt de presse (6) est déclenché en dehors de la première fenêtre d'angle de rotation (3), dans le cas où la rotation de l'entraînement à manivelle ou excentrique (4) après le déclenchement de l'arrêt de presse (6) ne s'arrête pas à un angle de rotation spécifique avant la première fenêtre d'angle de rotation suivante ou avant l'entrée dans la première fenêtre d'angle de rotation suivante, annule la synchronisation du profil de mouvement d'avance (5) avec la rotation de l'entraînement à manivelle ou excentrique (4) lorsque la première fenêtre d'angle de rotation est atteinte, puis permet au profil de mouvement d'avance (5) de se déplacer indépendamment de la rotation de l'entraînement à manivelle ou excentrique (4).
